(19) Europäisches Patentamt
European Patent Office
Office européen des brevets

(11) EP 1 984 473 B1

(12) **EUROPEAN PATENT SPECIFICATION**

(45) Date of publication and mention of the grant of the patent:
**25.11.2009 Bulletin 2009/48**

(21) Application number: **07716954.8**

(22) Date of filing: **24.01.2007**

(51) Int Cl.:
***C09K 21/14*** *(2006.01)* ***C08L 69/00*** *(2006.01)*

(86) International application number:
**PCT/US2007/001826**

(87) International publication number:
**WO 2007/094932 (23.08.2007 Gazette 2007/34)**

(54) **HALOGEN-FREE POLYCARBONATE COMPOSITIONS AND ARTICLES FORMED THEREFROM**

HALOGENFREIE POLYCARBONATZUSAMMENSETZUNGEN UND DARAUS GEBILDETE FORMKÖRPER

COMPOSITIONS DE POLYCARBONATE SANS HALOGÈNE ET ARTICLES FORMÉS À PARTIR DE CES COMPOSITIONS

(84) Designated Contracting States:
**AT BE BG CH CY CZ DE DK EE ES FI FR GB GR HU IE IS IT LI LT LU LV MC NL PL PT RO SE SI SK TR**

(30) Priority: **14.02.2006 US 353837**

(43) Date of publication of application:
**29.10.2008 Bulletin 2008/44**

(73) Proprietor: **SABIC Innovative Plastics IP B.V.**
**4612 PX Bergen Op Zoom OH (NL)**

(72) Inventors:
- **JIAO, Hua**
  **Shijlazhuang 050000 (CN)**
- **LIN, Yegang**
  **Pudong New District, Shanghai 200120 (CN)**
- **SINGH, Rajendra, Kashinath**
  **Evansville, IN 47712 (US)**
- **TJAHJADI, Mahari**
  **Shanghai 201204 (CN)**
- **YANG, Jingwu**
  **Jing An District, Shanghai 200040 (CN)**
- **YANG, Xinmin**
  **Nanhui, Shanghai (CN)**

(74) Representative: **Modiano, Micaela Nadia**
**Modiano Josif Pisanty & Staub Ltd**
**Thierschstrasse 11**
**80538 München (DE)**

(56) References cited:
**JP-A- 2 202 544**
**JP-A- 2002 037 997**
**KR-A- 20030 046 906**

EP 1 984 473 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

This disclosure generally relates, in various exemplary embodiments, to halogen-free polycarbonate compositions and articles formed from such compositions having enhanced transparency and/or fire-retardance characteristics, as well as uses thereof.

With their strength and clarity, polycarbonate (PC) resins have a great many significant commercial applications. Unfortunately, polycarbonate resins are inherently not very flame resistant and hence, when burning, can drip hot molten material causing nearby materials to catch fire as well. Thus, in order to safely utilize polycarbonates in many commercial applications, it is necessary to include additives which further retard the flammability of the material and/or which reduce dripping. A variety of different materials have been described for use in producing fire-retardance (FR) and/or drip-resistant polycarbonates. Examples of these materials include those described in U.S. Pat. Nos. 3,971,756; 4,028,297; 4,110,299; 4,130,530; 4,303,575; 4,335,038; 4,552,911; 4,916,194; 5,218,027; and, 5,508,323.

Flame retardance additives utilized today typically include various sulfonate salts, phosphorous acid esters, brominated and/or chlorinated flame retardants, etc. However, the phosphate additives, which are used at relatively high loadings (i.e. greater than 5% and around 10% to produce similar UL94 V0 performance), will deteriorate overall material mechanical performance. Additionally, brominated and chlorinated additives, and even some fluorinated additives at certain loadings are prohibited by various Non-Government Organizations (NGO's) and environmental protection rules, such as Blue Angel, TCO'99, DIN/VDE, etc. Thus, sulfonate salts are very widely used in the industry, and two particular examples are perfluoroalkane sulfonates, such as potassium perfluorobutane sulfonate ("KPFBS", also known as "Rimar salt") and potassium diphenylsulfone sulfonate ("KSS").

For example, the use of perfluoroalkane sulfonates in polycarbonate resins is described in U.S. Pat. No. 3,775,367. Additionally, U.S. Patent No. 6,353,046 discloses that improved fire properties can be imparted to polycarbonate resin compositions by incorporating into the polycarbonate, potassium perfluorobutane sulfonate, and a cyclic siloxane, such as octaphenylcyclotetrasiloxane. U.S. Patent 6,790,899 specifies the finding of a synergistic effect between KPFBS and sodium salt of toluene sulfonic acid (NaTS) on flame retardant polycarbonate compositions. Moreover, U.S. Patent Application 20050009968 teaches the synergistic effect between KPFBS and a number of inorganic sodium salts in transparent flame retardant carbonate compositions. Nevertheless, KPFBS contains fluorine and therefore is not Blue Angel conforming.

However, for KSS, only limited fire-retardance performance can be obtained when it is used alone. The conventional means for enhancing the fire-retardancy properties while retaining transparency has been through the use of soluble organic halogen additives with KSS. For example, in some polycarbonate resin compositions, KSS with a loading of 0.3-0.5 phr is used with brominated polycarbonate. Without the bromine, those compositions have inconsistent/unreliable performance in the UL94 V0 3.0mm flammability test that these compositions are designed to meet.

In a co-pending application, U. S. Application Serial No. 11/353,732, KSS is combined with NaTS and an optional anti-dripping agent, such as polytetrafluoroethylene (PTFE). However, because PTFE is opaque, the polycarbonate compositions produced are not satisfactorily transparent.

A further objective is to produce a polycarbonate product which is environmentally friendly. For example, many commercial polycarbonate grades in the current market, which are mostly loaded with KPFBS as flame retardance additive, are not Blue Angel conforming because of the fluorine content. Moreover, the brominated additive used in conjunction with KSS is unsuitable for consuming products which are subject to "ECOs-friendly" standards, since these standards prohibit the inclusion of bromine or chlorine based flame retardant additives.

There accordingly remains a need in the art for halogen-free polycarbonate compositions that can readily produce an article with enhanced transparency, good flame retardance efficiency, and at a thinner gage, which is also cost-effective, and have good manufacturability characteristics, among others.

BRIEF DESCRIPTION

A halogen-free polycarbonate composition is disclosed having improved fire-retardancy and/or transparency characteristics. The composition comprises a polycarbonate, and a synergistic combination of an aromatic sulfone sulfonate such as potassium diphenylsulfone sulfonate (KSS), an aromatic sulfonate such as sodium salt of toluene sulfonic acid (NaTS), and optionally a siloxane oligomer. The polycarbonate composition is useful for manufacture of electronic and mechanical parts, among others.

A further aspect of the present disclosure provides a substantially halogen-free (i.e. less than 0.1 parts by weight halogen) composition, such as a thermoplastic composition, that has improved fire-retardancy and/or transparency characteristics, which comprises (i) 100 parts by weight of polycarbonate; (ii) from about 0.0001 parts to about 0.2 parts by weight of an aromatic sulfone sulfonate; (iii) from about 0.002 parts to about 0.2 parts by weight of an aromatic

sulfonate; and, (iv) optionally from about 0.05 parts to about 2 parts by weight of a siloxane oligomer.

In still another aspect, the present disclosure relates to a flame retardant thermoplastic composition having enhanced transparency. The composition comprises an effective amount of a polycarbonate, an aromatic sulfone sulfonate, an aromatic sulfonate and, optionally, a siloxane oligomer, to produce an article having an enhanced UL 94 flammability rating, low haze, and high transmittance.

In another aspect, the present disclosure provides an article manufactured from the noted thermoplastic compositions, such as an electronic or a mechanical part.

In a still further embodiment, the article is substantially halogen-free (i.e. contains less than 0.1 parts halogen) and/or substantially transparent (exhibits light transmittance of 90% or more).

The above described characteristics and other non-limiting features are exemplified by the following detailed description.

DETAILED DESCRIPTION

Disclosed herein is a polycarbonate composition, which comprises a synergistic combination of an aromatic sulfone sulfonates such as potassium diphenylsulfone sulfonate (KSS), with an aromatic sulfonate, such as sodium salt of toluene sulfonic acid (NaTS), optionally in the presence of a siloxane oligomer. The polycarbonate composition exhibits particular desirable properties such as zero halogen content, and improved fire-retardancy and/or transparency characteristics, among others.

As used herein, the term "polycarbonate" refers to a polymer comprising the same or different carbonate units, or a copolymer that comprises the same or different carbonate units, as well as one or more units other than carbonate (i.e. copolycarbonate); the term "aliphatic" refers to a hydrocarbon radical having a valence of at least one comprising a linear or branched array of carbon atoms which is not cyclic; "aromatic" refers to a radical having a valence of at least one comprising at least one aromatic group; "cycloaliphatic" refers to a radical having a valence of at least one comprising an array of carbon atoms which is cyclic but not aromatic; "alkyl" refers to a straight or branched chain monovalent hydrocarbon radical; "alkylene" refers to a straight or branched chain divalent hydrocarbon radical; "alkylidene" refers to a straight or branched chain divalent hydrocarbon radical, with both valences on a single common carbon atom; "alkenyl" refers to a straight or branched chain monovalent hydrocarbon radical having at least two carbons joined by a carbon-carbon double bond; "cycloalkyl" refers to a non-aromatic alicyclic monovalent hydrocarbon radical having at least three carbon atoms, with at least one degree of unsaturation; "cycloalkylene" refers to a non-aromatic alicyclic divalent hydrocarbon radical having at least three carbon atoms, with at least one degree of unsaturation; "aryl" refers to a monovalent aromatic benzene ring radical, or to an optionally substituted benzene ring system radical system fused to at least one optionally substituted benzene rings; "aromatic radical" refers to a radical having a valence of at least one comprising at least one aromatic group; examples of aromatic radicals include phenyl, pyridyl, furanyl, thienyl, naphthyl, and the like; "arylene" refers to a benzene ring diradical or to a benzene ring system diradical fused to at least one optionally substituted benzene rings; "acyl" refers to a monovalent hydrocarbon radical joined to a carbonyl carbon atom, wherein the carbonyl carbon further connects to an adjoining group; "alkylaryl" refers to an alkyl group as defined above substituted onto an aryl as defined above; "arylalkyl" refers to an aryl group as defined above substituted onto an alkyl as defined above; "alkoxy" refers to an alkyl group as defined above connected through an oxygen radical to an adjoining group; "aryloxy" refers to an aryl group as defined above connected through an oxygen radical to an adjoining group; the modifier "about" used in connection with a quantity is inclusive of the stated value and has the meaning dictated by the context (e.g., includes the degree of error associated with measurement of the particular quantity); "optional" or "optionally" means that the subsequently described event or circumstance may or may not occur, and that the description includes instances where the event occurs and instances where it does not; and "direct bond", where part of a structural variable specification, refers to the direct joining of the substituents preceding and succeeding the variable taken as a "direct bond".

Compounds are described herein using standard nomenclature. A dash ("-") that is not between two letters or symbols is used to indicate a point of attachment for a substituent. For example, -CHO is attached through the carbon of the carbonyl (C=O) group. The singular forms "a," "an," and "the" include plural referents unless the context clearly dictates otherwise. The endpoints of all ranges reciting the same characteristic or component are independently combinable and inclusive of the recited endpoint. All references are incorporated herein by reference. The terms "first," "second," and the like herein do not denote any order, quantity, or importance, but rather are used to distinguish one element from another.

The composition comprises effective amounts of components to produce enhanced flame retardancy and transparency with a substantially low, or no, halogen content. In one embodiment, the disclosure provides a flame retardant (FR) composition such as a thermoplastic composition, which is substantially transparent (i.e. has low haze and high light transmission) and is free of halogen. The composition comprises:

(i) 100 parts by weight of polycarbonate;

(ii) from about 0.0001 parts to about 0.2 parts by weight of an aromatic sulfone sulfonate;

(iii) from about 0.002 parts to about 0.2 parts by weight of an aromatic sulfonate; and

(iv) optionally from about 0.05 parts to about 2 parts by weight of a siloxane oligomer.

In another embodiment, the aromatic sulfone sulfonate comprises a formula (K-1) compound:

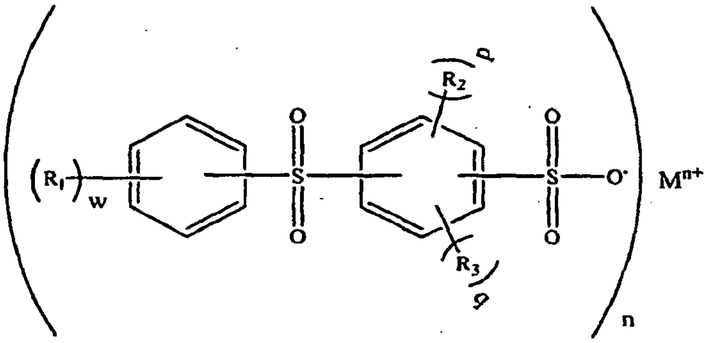

(K-1)

wherein $R_1$, $R_2$, and $R_3$ are independently selected from a $C_1$-$C_6$ alkyl group such as methyl and ethyl; M is a metal such as sodium or potassium; n is an integer and 1≤n≤3; w is an integer and 0≤w≤5; p and q are integers, p≥0, q≥0, and p+q≤4.

For example, in formula (K-1), M may be potassium, n=1, and w=p=q=0. The component (ii) of the thermoplastic composition is therefore potassium diphenylsulfone sulfonate (KSS), e.g. a formula (K-2) compound:

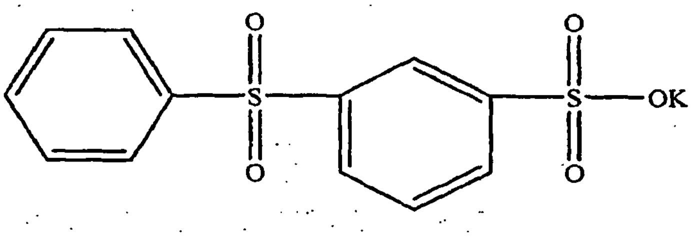

(K-2).

In a further embodiment, the aromatic sulfonate comprises a formula (N-1) compound:

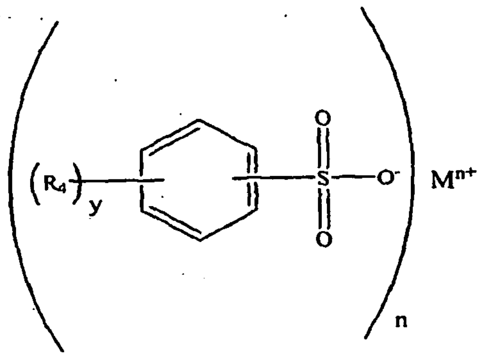

(N-1)

wherein $R_4$ is selected from a $C_1$-$C_6$ alkyl group such as methyl and ethyl; M is a metal such as sodium or potassium; n is an integer and 1≤n≤3; y is an integer and 0≤y≤5.

For example, in formula (N-1), $R_4$ may be a p-methyl group, M may be sodium, n=1, and y=1. The component (iii) of the thermoplastic composition may therefore be a formula (N-2) compound, or a sodium salt of toluene sulfonic acid (NaTS):

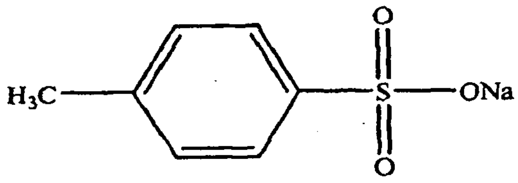

(N-2).

In another embodiment, the siloxane oligomer used in the flame retardant composition comprises a formula (P-1) compound:

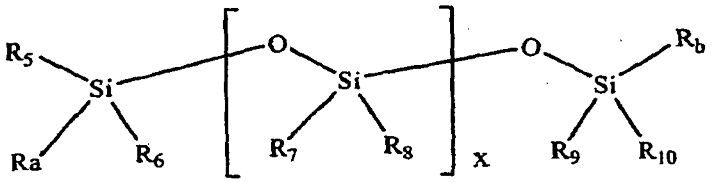

(P-1)

wherein $R_5$, $R_6$, $R_7$, $R_8$, $R_9$, $R_{10}$, $R_a$ and $R_b$ are independently selected from a $C_1$-$C_8$ alkyl group such as methyl and ethyl, or an arylalkyl group such as phenylmethyl, phenylethyl, and phenylpropyl, or an aryl group such as phenyl; x is an integer and 1≤x≤10.

For example, in formula (P-1), $R_5$, $R_6$, $R_7$, $R_8$, $R_9$, and $R_{10}$ may all be methyl; $R_a$ and $R_b$ are phenylpropyl; and 3≤x≤4. The component (iv) of the thermoplastic R composition therefore may be bi-phenylpropyl dimethicone (SI-ADDITNE 1) such as formula (P-2) compound:

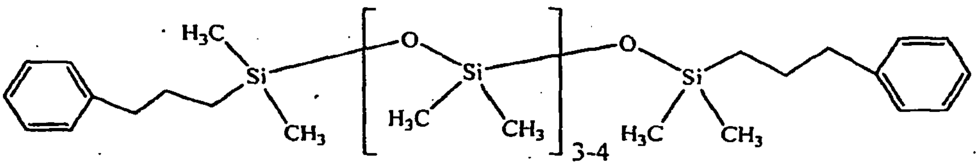

(P-2).

In a further embodiment, SI-ADDITIVE 1 with Mw=564-638 may be obtained from GE Silicones (General Electric Co.) under the trade name of SF1555.

In still another embodiment, the disclosure provides a flame retardant composition such as a thermoplastic composition, which comprises (i) 100 parts by weight of polycarbonate; (ii) from about 0.0001 parts to about 0.2 parts by weight of KSS; (iii) from about 0.002 parts to about 0.2 parts by weight of NaTS; and (iv) optionally from about 0.05 parts to about 2 parts by weight of SI-ADDITIVE 1.

Although the amount of KSS is generally from about 0.0001 parts to about 0.2 parts by weight, specifically it can be from about 0.0005 parts to about 0.15 parts by weight, more specifically it can be from about 0.001 parts to about 0.1 parts by weight, and most specifically it can be from about 0.01 parts to about 0.08 parts by weight.

Although the amount of NaTS is generally from about 0.002 parts to about 0.2 parts by weight, specifically it can be from about 0.005 parts to about 0.15 parts by weight, more specifically it can be from about 0.01 parts to about 0.1 parts by weight, and most specifically it can be from about 0.01 parts to about 0.08 parts by weight.

Although the amount of SI-ADDITNE 1 is generally from about 0.05 parts to about 2 parts by weight, specifically it can be from about 0.1 parts to about 1.5 parts by weight, more specifically it can be from about 0.1 parts to about 1.0 parts by weight, and most specifically it can be from about 0.3 parts to about 0.8 parts by weight.

In a specific embodiment, the disclosure provides a flame retardant composition such as a thermoplastic composition, which comprises (i) 100 parts by weight of linear polycarbonate; (ii) from about 0.0002 parts to about 0.1 parts by weight of KSS; (iii) from about 0.005 parts to about 0.1 parts by weight of NaTS; and (iv) optionally from about 0.1 parts to about 1 parts by weight of SI-ADDITIVE 1.

In one embodiment, the flame retardant composition further comprises a silicon, i.e. Si, additive. Non-limiting examples of the Si-additive may those described in General Electric Co.'s Published Patent Application 20020099160A1. For example, a Si-additive can have a formula as shown below:

$$R^1_aSi(OR^2)_bO_{(4-a-b)/2}$$

where $R^1$ is a substituted or unsubstituted univalent hydrocarbon group containing an aryl group as an essential component; $R^2$ is a substituted or unsubstituted univalent hydrocarbon group; $R^1$ and $R^2$ may be the same as or different from each other; $0.2 \leq a \leq 2.7$; $0.2 \leq b \leq 2.4$; and $a+b<3$.

In an embodiment, the silicone additive comprises SI-ADDITIVE 2, which is obtained from GE Silicones (General Electric Co.) with a general structure described above. The amount of the Si-additive may range generally from about 0.05 parts to about 2 parts by weight, specifically from about 0.1 parts to about 1.5 parts by weight, more specifically from about 0.1 parts to about 0.8 parts by weight, and most specifically from about 0.3 parts to about 0.8 parts by weight, based on 100 parts of the polycarbonate in the composition.

In another embodiment, the composition uses an aqueous carrier, which results in superior fire-retardant performance. For example, one or more of the salts, KSS and NaTS, may be pre-mixed in a suitable solvent such as water, and then formulated into the composition in accordance with the disclosure.

The polycarbonate of the composition can comprise repeating structural carbonate units of the formula (1):

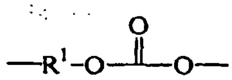

(1)

in which $R^1$ group may be selected from any aromatic radicals, alicyclic radicals, and aliphatic radicals. In an embodiment, at least 60% of the $R^1$ groups are aromatic organic radicals.

In a further embodiment, $R^1$ is an aromatic organic radical, for example a radical of the formula (2):

$$-A^1-Y^1-A^2- \qquad (2)$$

wherein each of $A^1$ and $A^2$ is a monocyclic divalent aryl radical and $Y^1$ is a bridging radical having one or two atoms that separate $A^1$ from $A^2$. In an exemplary embodiment, one atom separates $A^1$ from $A^2$. Illustrative non-limiting examples ofradicals of this type are -O-, -S-, -S(O)-, $-S(O_2)-$, -C(O)-, methylene, cyclohexyl-methylene, 2-[2.2.1]-bicycloheptylidene, ethylidene, isopropylidene, neopentylidene, cyclohexylidene, cyclopentadecylidene, cyclododecylidene, and adamantylidene. The bridging radical $Y^1$ may be a hydrocarbon group or a saturated hydrocarbon group such as methylene, cyclohexylidene, or isopropylidene.

In another embodiment, the polycarbonate can comprise repeating structural carbonate units of the formula (A-I):

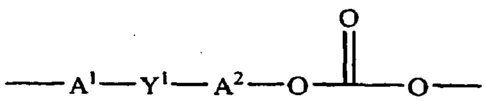

(A-1)

wherein $Y^1$, $A^1$ and $A^2$ are as described above.

In yet another embodiment, polycarbonates may be produced via the interfacial reaction of dihydroxy compounds having the formula $HO-R^1-OH$, which includes dihydroxy compounds of formula (3):

$$HO-A^1-Y^1-A^2-OH \qquad (3)$$

wherein $Y^1$, $A^1$ and $A^2$ are as described above.

In still another embodiment, polycarbonates may be produced via the interfacial reaction of bisphenol compounds of general formula (4):

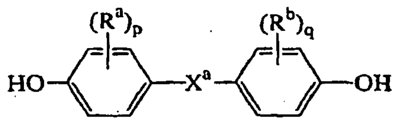

(4)

wherein $R^a$ and $R^b$ each represent a halogen atom or a monovalent hydrocarbon group and may be the same or different; p and q are each independently integers of 0 to 4; and $X^a$ represents one of the groups of formula (5):

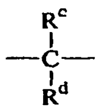

or

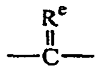

(5)

wherein $R^c$ and $R^d$ each independently represent a hydrogen atom or a monovalent linear or cyclic hydrocarbon group and $R^e$ is a divalent hydrocarbon group.

In yet a further embodiment, polycarbonates may be produced via the interfacial reaction of one or more bisphenol compounds of general formula (B-1):

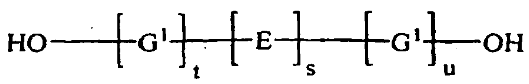

(B-1)

wherein each $G^1$ is independently at each occurrence a $C_6$-$C_{20}$ aromatic radical; E is independently at each occurrence a bond, a $C_3$-$C_{20}$ cycloaliphatic radical, a $C_3$-$C_{20}$ aromatic radical, a $C_1$-$C_{20}$ aliphatic radical, a sulfur-containing linkage, a selenium-containing linkage, a phosphorus-containing linkage, or an oxygen atom; "t" is a number greater than or equal to one; "s" is either zero or one; and "u" is a whole number including zero.

Some illustrative, non-limiting examples of suitable dihydroxy compounds include the following: resorcinol; $C_{1-3}$ alkyl-substituted resorcinol; 4-bromoresorcinol, hydroquinone, 4,4'-dihydroxybiphenyl, 1,6-dihydroxynaphthalene, 2,6-dihydroxynaphthalene, 1,1-bis(4-hydroxyphenyl)cyclopentane; 2,2-bis(3-allyl-4-hydroxyphenyl)propane; 2,2-bis(2-t-butyl-4-hydroxy-5-methylphenyl)propane; 2,2-bis(3-t-butyl-4-hydroxy-6-methylphenyl)propane; 2,2-bis(3-t-butyl-4-hydroxy-6-methylphenyl)butane; 1,3 -bis[4-hydroxyphenyl-1-(1-methylethylidine)]benzene; 1,4-bis[4-hydroxyphenyl-1-(1-methylethylidine)]benzene; 1,3-bis[3-t-butyl-4-hydroxy-6-methylphenyl-1-(1-methylethylidine)]benzene; 1,4-bis[3-t-butyl-4-hydroxy-6-methylphenyl-1-(1-methylethylidine)]benzene; 4,4'-biphenol; 2,2',6,8-tetramethyl-3,3',5,5'-tetrabromo-4,4'-biphenol; 2,2',6,6'-tetramethyl-3,3',5-tribromo-4,4'-biphenol; 1,1-bis(4-hydroxyphenyl)-2,2,2-trichloroethane; 1,1-bis(4-hydroxyphenyl)-1-cyanoethane; 1,1-bis(4-hydroxyphenyl)dicyanomethane; 1,1-bis(4-hydroxyphenyl)-1-cyano-1-phenylmethane; 2,2-bis(3-methyl-4-hydroxyphenyl)propane; 1,1-bis(4-hydroxyphenyl)norbomane; 3,3-bis(4-hydroxyphenyl)phthalide; 1,2-bis(4-hydroxyphenyl)ethane; 1,3-bis(4-hydroxyphenyl)propenone; bis(4-hydroxyphenyl) sulfide; 4,4'-oxydiphenol; 4,4-bis(4-hydroxyphenyl)pentanoic acid; 4,4-bis(3,5-dimethyl-4-hydroxyphenyl)pentanoic acid; 2,2-bis(4-hydroxyphenyl) acetic acid; 2,4'-dihydroxydiphenylmethane; 2-bis(2-hydroxyphenyl)methane; bis(4-hydroxyphenyl)methane; bis(4-hydroxy-5-nitrophenyl)methane; bis(4-hydroxy-2,6-dimethyl-3-methoxyphenyl)methane; 1,1-bis(4-hydroxyphenyl)ethane; 1,1-bis(4-hydroxy-2-chlorophenyl)ethane; 2,2-bis(4-hydroxyphenyl)propane (bisphenol-A); 1,1-bis(4-hydroxyphenyl)propane; 2,2-bis(3-chloro-4-hydroxyphenyl)propane; 2,2-bis(3-bromo-4-hydroxyphenyl) propane; 2,2-bis(4-hydroxy-3-methylphenyl)propane; 2,2-bis(4-hydroxy-3-isopropylphenyl)propane; 2,2-bis(3-t-butyl-4-hydroxyphenyl)propane; 2,2-bis(3-phenyl-4-hydroxyphenyl)propane; 2,2-bis(3,5-dichloro-4-hydroxyphenyl)propane; 2,2-bis(3,5-dibromo-4-hydroxyphenyl)propane; 2,2-bis(3,5-dimethyl-4-hydroxyphenyl)propane; 2,2-bis(3-chloro-4-hydroxy-5-methylphenyl)propane; 2,2-bis(3-bromo-4-hydroxy-5-methylphenyl)propane; 2,2-bis(3-chloro-4-hydroxy-5-isopropylphenyl)propane; 2,2-bis(3-bromo-4-hydroxy-5-isopropylphenyl)propane; 2,2-bis(3-t-butyl-5-chloro-4-hydroxyphenyl)propane; 2,2-bis(3-bromo-5-t-butyl-4-hydroxyphenyl)propane; 2,2-bis(3-chloro-5-phenyl-4-hydroxyphenyl)propane; 2,2-bis(3-bromo-5-phenyl-4-hydroxyphenyl)propane; 2,2-bis(3,5-disopropyl-4-hydroxyphenyl)propane; 2,2-bis (3,5-di-t-butyl-4-hydroxyphenyl)propane; 2,2-bis(3,5-diphenyl-4-hydroxyphenyl)propane; 2,2-bis(4-hydroxy-2,3,5,6-tetrachlorophenyl)propane; 2,2-bis(4-hydroxy-2,3,5,6-tetrabromophenyl)propane; 2,2-bis(4-hydroxy-2,3,5,6-tetramethylphenyl)propane; 2,2-bis(2,6-dichloro-3,5-dimethyl-4-hydroxyphenyl)propane; 2,2-bis(2,6-dibromo-3,5-dimethyl-4-hydroxyphenyl)propane; 2,2-bis(4-hydroxy-3-ethylphenyl)propane; 2,2-bis(4-hydroxy-3,5-dimethylphenyl)propane; 2,2-bis(3,5,3',5'-tetrachloro-4,4'-dihydroxyphenyl)propane; 1,1-bis(4-hydroxyphenyl)cyclohexylmethane; 2,2-bis(4-hydroxyphenyl)-1-phenylpropane; 1,1-bis(4-hydroxyphenyl)cyclohexane; 1,1-bis(3-chloro-4-hydroxyphenyl)cyclohexane; 1,1-bis(3-bromo-4-hydroxyphenyl)cyclohexane; 1,1-bis(4-hydroxy-3-methylphenyl)cyclohexane; 1,1-bis(4-hydroxy-3-isopropylphenyl)cyclohexane; 1,1-bis(3-t-butyl-4-hydroxyphenyl)cyclohexane; 1,1-bis(3-phenyl-4-hydroxyphenyl)cyclohexane; 1,1-bis(3,5-dichloro-4-hydroxyphenyl)cyclohexane; 1,1-bis(3,5-dibromo-4-hydroxyphenyl)cyclohexane; 1,1-bis(3,5-dimethyl-4-hydroxyphenyl)cyclohexane; 4,4'-[1-methyl-4-(1-methyl-ethyl)-1,3-cyclohexandiyl]bisphenol (1,3 BHPM); 4-[1-[3-(4-hydroxyphenyl)-4-methylcyclohexyl]-1-methyl-ethyl]-phenol (2,8 BHPM); 3,8-dihydroxy-5a,10b-diphenylcoumarano-2',3',2,3-coumarane (DCBP); 2-phenyl-3,3-bis(4-hydroxyphenyl)phthalimidine; 1,1-bis(3-chloro-4-hydroxy-5-methylphenyl)cyclohexane; 1,1-bis(3-bromo-4-hydroxy-5-methylphenyl)cyclohexane; 1,1-bis(3-chloro-4-hydroxy-5-isopropylphenyl)cyclohexane; 1,1-bis(3-bromo-4-hydroxy-5-isopropylphenyl)cyclohexane; 1,1-bis(3-t-butyl-5-chloro-4-hydroxyphenyl)cyclohexane; 1,1-bis(3-bromo-5-t-butyl-4-hydroxyphenyl)cyclohexane; 1,1-bis(3-chloro-5-phenyl-4-hydroxyphenyl)cyclohexane; 1,1-bis(3-bromo-5-phenyl-4-hydroxyphenyl)cyclohexane; 1,1-bis(3,5-disopropyl-4-hydroxyphenyl)cyclohexane; 1,1-bis(3,5-di-t-butyl-4-hydroxyphenyl)cyclohexane; 1,1-bis(3,5-diphenyl-4-hydroxyphenyl)cyclohexane; 1,1-bis(4-hydroxy-2,3,5,6-tetrachlorophenyl)cyclohexane; 1,1-bis(4-hydroxy-2,3,5,6-tetrabromophenyl)cyclohexane; 1,1-bis(4-hydroxy-2,3,5,6-tetramethylphenyl)cyclohexane; 1,1-bis(2,6-dichloro-3,5-dimethyl-4-hydroxyphenyl)cyclohexane; 1,1-bis(2,6-dibromo-3,5-dimethyl-4-hydroxyphenyl)cyclohexane; 1,1-bis(4-hydroxyphenyl)-3,3,5-trimethylcyclohexane; 1,1-bis(3-chloro-4-hydroxyphenyl)-3,3,5-trimethylcyclohexane; 1,1-bis(3-bromo-4-hydroxyphenyl)-3,3,5-trimethylcyclohexane; 1,1-bis(4-hydroxy-3-methylphenyl)-3,3,5-trimethylcyclohexane; 1,1-bis(4-hydroxy-3-isopropylphenyl)-3,3,5-trimethylcyclohexane; 1,1-bis(3-t-butyl-4-hydroxyphenyl)-3,3,5-trimethylcyclohexane; 1,1-bis(3-phenyl-4-hydroxyphenyl)-3,3,5-trimethylcyclohexane; 1,1-bis(3,5-dichloro-4-hydroxyphenyl)-3,3,5-trimethylcyclohexane; 1,1-bis(3,5-dibromo-4-hydroxyphenyl)-3,3,5-trimethylcyclohexane; 1,1-bis(3,5-dimethyl-4-hydroxyphenyl)-3,3,5-trimethylcyclohexane; 1,1-bis(3-chloro-4-hydroxy-5-methylphenyl)-3,3,5-trimethylcyclohexane; 1,1-bis(3-bromo-4-hydroxy-5-methylphenyl)-3,3,5-trimethylcyclohexane; 1,1-bis(3-chloro-4-hydroxy-5-isopropylphenyl)-3,3,5-trimethylcyclohexane; 1,1-bis(3-bromo-4-hydroxy-5-isopropylphenyl)-3,3,5-trimethylcyclohexane; 1,1-bis(3-t-butyl-5-chloro-4-hydroxyphenyl)-3,3,5-trimethylcyclohexane; 1,1-bis(3-bromo-5-t-butyl-4-hydroxyphenyl)-3,3,5-trimethylcyclohexane; bis(3-chloro-5-phenyl-4-hydroxyphenyl)-3,3,5-trimethylcyclohexane; 1,1-bis(3-bromo-5-phenyl-4-hydroxyphenyl)-3,3,5-trimethylcyclohexane; 1,1-bis(3,5-disopropyl-4-hydroxyphenyl)-3,3,5-trimethylcyclohexane; 1,1-bis(3,5-di-t-butyl-4-hydroxyphenyl)-3,3,5-trimethylcyclohexane; 1,1-bis(3,5-diphenyl-4-hydroxyphenyl)-3,3,5-trimethylcyclohexane; 1,1-bis(4-hydroxy-2,3,5,6-tetrachlorophenyl)-3,3,5-trimethylcyclohexane; 1,1-bis(4-hydroxy-2,3,5,6-tetrabromophenyl)-3,3,5-trimethylcyclohexane; 1,1-bis(4-hydroxy-2,3,5,6-tetramethylphenyl)-3,3,5-trimethylcyclohexane; 1,1-bis(2,6-dichloro-3,5-dimethyl-4-hydroxyphenyl)-3,3,5-trimethylcyclohexane; 1,1-bis(2,6-dibromo-3,5-dimethyl-4-hydroxyphenyl)-3,3,5-trimethylcyclohexane; 4,4-bis(4-hydroxyphenyl)heptane; 1,1-bis(4-hydroxyphenyl)decane; 1,1-bis(4-hydroxyphenyl)cyclododecane; 1,1-bis(3,5-dimethyl-4-hydroxyphenyl)cyclododecane; 4,4'dihydroxy-1,1-biphenyl; 4,4'-dihydroxy-3,3'-dimethyl-1,1-biphenyl; 4,4'-dihydroxy-3,3'-dioctyl-1,1-biphenyl; 4,4'-(3,3,5-trimethylcyclohexylidene)diphenol; 4,4'-bis(3,5-dimethyl)diphenol; 4,4'-dihydroxydiphenylether; 4,4'-dihydroxydiphenylthioether; 1,3-bis(2-(4-hydroxyphenyl)-2-propyl)benzene; 1,3-bis(2-(4-hydroxy-3-methylphenyl)-2-propyl)benzene; 1,4-bis(2-(4-hydroxyphenyl)-2-propyl)benzene; 1,4-bis(2-(4-hydroxy-3-methylphenyl)-2-propyl)benzene; 2,4'-dihydroxyphenyl sulfone; 4,4'-dihydroxydiphenylsulfone (BPS); bis(4-hydroxyphenyl)methane; 2,6-dihydroxy naphthalene; hydroquinone; 3-(4-hydroxyphenyl)-1,1,3-trimethylindan-5-ol; 1-(4-hydroxyphenyl)-1,3,3-trimethylindan-5-ol; 4,4-dihydroxydiphenyl ether; 4,4-dihydroxy-3,3-dichlorodiphenylether; 4,4-dihydroxy-2,5-dihydroxydiphenyl ether; 4,4-thiodiphenol; 2,2,2',2'-tetrahydro-3,3,3',3'-tetramethyl-1,1'-spirobi[1H-indene]-6,6'-diol; bis(4-hydroxyplienyl)acetonitrile; bis(4-hydroxyphenyl)sulfoxide; bis(4-hydroxyphenyl)sulfone; 9,9-bis(4-hydroxyphenyl)fluorine; 2,7-dihydroxypyrene; 6,6'-dihydroxy-3,3,3',3'-tetramethylspiro(bis)indane ("spirobiindane bisphenol"); 3,3-bis(4-hydroxyphenyl)phthalide; 2,6-dihydroxydibenzo-p-dioxin; 2,6-dihydroxythianthrene; 2,7-dihydroxyphenoxathin; 2,7-dihydroxy-9,10-dimethylphenazine; 3,6-dihydroxydibenzofuran; 3,6-dihydroxydibenzothiophene; 2,7-dihydroxycarbazole, and the like, as well as combinations comprising at least one of the foregoing dihydroxy compounds.

Specific examples of the types of bisphenol compounds represented by formula (4) include 1,1-bis(4-hydroxyphenyl) methane, 1,1-bis(4-hydroxyphenyl) ethane, 2,2-bis(4-hydroxyphenyl) propane (hereinafter "bisphenol A" or "BPA"), 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxy-t-butylphenyl) propane, 3,3-bis(4-hydroxyphenyl)phthalimidine, 2-phenyl-3,3-bis(4-hydroxyphenyl)phthalimidine, 1,1-bis(4-hydroxyphenyl)-3,3,5-trimethylcyclohexane, and 1,1-bis(4-hydroxy-3-methylphenyl)cyclohexane. Combinations comprising at least one of the foregoing dihydroxy compounds may also be used.

In one embodiment, the polycarbonate can comprise repeating structural carbonate units of the formula (A-2):

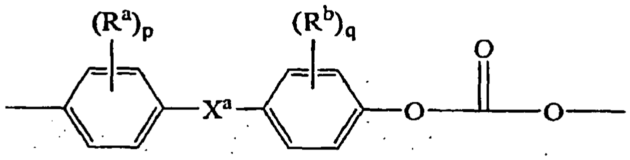

(A-2)

wherein p, q, $R^a$, $R^b$ and $X^a$ are as described above.

In another embodiment, the polycarbonate can comprise repeating structural carbonate units of the formula (A-3), i.e. BPA unit:

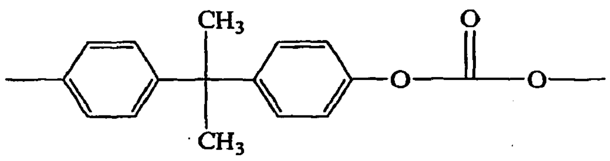

(A-3)

Branched polycarbonates are also useful, as well as blends of a linear polycarbonate and a branched polycarbonate. The branched polycarbonates may be prepared by adding a branching agent during polymerization. These branching agents include polyfunctional organic compounds containing at least three functional groups selected from hydroxyl, carboxyl, carboxylic anhydride, haloformyl, and mixtures of the foregoing functional groups. Specific examples include trimellitic acid, trimellitic anhydride, trimellitic trichloride, tris-p-hydroxy phenyl ethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents may be added at a level of 0.05 to 2.0 wt% of the polycarbonate. All types of polycarbonate end groups are contemplated as being useful in the polycarbonate, provided that such end groups do not significantly affect desired properties of the polycarbonate product.

The polycarbonates may have a weight average molecular weight (Mw) of from about 20,000 to about 37,000, more specifically from about 22,000 to about 30,000, and most specifically from about 22,000 to about 28,000, as measured by gel permeation chromatography (GPC) using a crosslinked styrene-divinyl benzene column, at a sample concentration of 1 milligram per milliliter, and as calibrated with polycarbonate standards.

In another embodiment, the component (i) of the flame retardant composition comprises a high flow PC, a normal flow PC (100 Grade PC), or a mixture thereof. The high flow PC may include, for example, bisphenol-A polycarbonate homopolymer having a molecular weight of about 21,600 to 22,200 (molecular weights are based on Gel Permeation chromatography measurements using polycarbonate standards). The normal flow PC may include, for example, bisphenol-A polycarbonate homopolymer having a molecular weight of about 29,500 to 30,300.

In one embodiment, a mixture of high flow PC and normal flow PC is used as the component (i). The weight ratio between the high flow PC and normal flow PC may be in the range of from about 5:95 to about 95:5, specifically from about 10:90 to about 90:10, and more specifically from about 20:80 to about 80:20.

In an embodiment, the polycarbonate has flow properties suitable for the manufacture of thin articles. Melt volume flow rate (often abbreviated MVR) measures the rate of extrusion of a thermoplastic through an orifice at a prescribed temperature and load. Polycarbonates suitable for the formation of thin articles may have an MVR, measured at 300°C/1.2 kg according to ASTM D1238-04, of 0.5 to 80 cubic centimeters per 10 minutes (cc/10 min). In a specific embodiment, a suitable polycarbonate composition has an MVR measured at 300°C/1.2 kg according to ASTM D1238-04, of 0.5 to 50 cc/10 min, specifically 1 to 25 cc/10 min, and more specifically 3 to 20 cc/10 min. Mixtures of polycarbonates of different flow properties may be used to achieve the overall desired flow property.

Polycarbonates of the disclosure may include copolymers comprising carbonate chain units and other units. A specific suitable copolymer is a polyester-polycarbonate, also known as a copolyester-polycarbonate and polyester-carbonate. Combinations of polycarbonates and polyester-polycarbonates may also be used. As used herein, a "combination" is inclusive of all mixtures, blends, alloys, reaction products, and the like.

However, the amount of polyester-polycarbonate and/or polyester in the composition should maintain such a low level that it causes no adverse effect on the FR property of the composition. For example, the amount of polyester-polycarbonate and/or polyester may be a trace amount, or may be as low as zero.

Suitable polycarbonates can be manufactured by processes such as interfacial polymerization and melt polymerization. Although the reaction conditions for interfacial polymerization may vary, an exemplary process generally

involves dissolving or dispersing a dihydric phenol reactant in aqueous caustic soda or potash, adding the resulting mixture to a suitable water-immiscible solvent medium, and contacting the reactants with a carbonate precursor in the presence of a suitable catalyst such as triethylamine or a phase transfer catalyst, under controlled pH conditions, e.g., 8 to 11. The most commonly used water immiscible solvents include methylene chloride, 1,2-dichloroethane, chlorobenzene, toluene, and the like. Suitable carbonate precursors include, for example, a carbonyl halide such as carbonyl bromide or carbonyl chloride, or a haloformate such as a bishaloformates of a dihydric phenol (e.g., the bischloroformates ofbisphenol A, hydroquinone, or the like) or a glycol (e.g., the bishaloformate of ethylene glycol, neopentyl glycol, polyethylene glycol, or the like). Combinations comprising at least one of the foregoing types of carbonate precursors may also be used.

A chain stopper (also referred to as a capping agent) may be included during polymerization. The chain-stopper limits molecular weight growth rate, and so controls molecular weight in the polycarbonate. A chain-stopper may be at least one of mono-phenolic compounds, mono-carboxylic acid chlorides, and/or mono-chloroformates.

For example, mono-phenolic compounds suitable as chain stoppers include monocyclic phenols, such as phenol, $C_1$-$C_{22}$ alkyl-substituted phenols, p-cumyl-phenol, p-tertiarybutyl phenol, hydroxy diphenyl; monoethers of diphenols, such as p-methoxyphenol. Alkyl-substituted phenols include those with branched chain alkyl substituents having 8 to 9 carbon atoms. A mono-phenolic UV absorber may be used as capping agent. Such compounds include 4-substituted-2-hydroxybenzophenones and their derivatives, aryl salicylates, monoesters of diphenols such as resorcinol monobenzoate, 2-(2-hydroxyaryl)-benzotriazoles and their derivatives, 2-(2-hydroxyaryl)-1,3,5-triazines and their derivatives, and the like. Specifically, mono-phenolic chain-stoppers include phenol, p-cumylphenol, and/or resorcinol monobenzoate.

Mono-carboxylic acid chlorides may also be suitable as chain stoppers. These include monocyclic, mono-carboxylic acid chlorides such as benzoyl chloride, $C_1$-$C_{22}$ alkyl-substituted benzoyl chloride, toluoyl chloride, halogen-substituted benzoyl chloride, bromobenzoyl chloride, cinnamoyl chloride, 4-nadimidobenzoyl chloride, and mixtures thereof; polycyclic, mono-carboxylic acid chlorides such as trimellitic anhydride chloride, and naphthoyl chloride; and mixtures of monocyclic and polycyclic mono-carboxylic acid chlorides. Chlorides of aliphatic monocarboxylic acids with up to 22 carbon atoms are suitable. Functionalized chlorides of aliphatic monocarboxylic acids, such as acryloyl chloride and methacryoyl chloride, are also suitable. Also suitable are mono-chloroformates including monocyclic, mono-chloroformates, such as phenyl chloroformate, alkyl-substituted phenyl chloroformate, p-cumyl phenyl chloroformate, toluene chloroformate, and mixtures thereof.

In one embodiment, the polyester-polycarbonates may be prepared by interfacial polymerization. Rather than utilizing a dicarboxylic acid, it is possible, and sometimes even preferred, to employ the reactive derivatives of the acid, such as the corresponding acid halides, in particular the acid dichlorides and the acid dibromides. Thus, for example instead of using isophthalic acid, terephthalic acid, or mixtures thereof, it is possible to employ isophthaloyl dichloride, terephthaloyl dichloride, and mixtures thereof.

Among the phase transfer catalysts that may be used are catalysts of the formula $(R^3)_4Q^+X$, wherein each $R^3$ is the same or different, and is a $C_{1-10}$ alkyl group; Q is a nitrogen or phosphorus atom; and X is a halogen atom or a $C_{1-8}$ alkoxy group or $C_{6-18}$ aryloxy group. Suitable phase transfer catalysts include, for example, $[CH_3(CH_2)_3]_4NX$, $[CH_3(CH_2)_3]_4PX$, $[CH_3(CH_2)_5]_4NX$, $[CH_3(CH_2)_6]_4NX$, $[CH_3(CH_2)_4]_4NX$, $CH_3[CH_3(CH_2)_3]_3NX$, and $CH_3[CH_3(CH_2)_2]_3NX$, wherein X is $Cl^-$, $Br^-$, a $C_{1-8}$ alkoxy group or a $C_{6-18}$ aryloxy group. In one embodiment, an effective amount of a phase transfer catalyst may be 0.1 to 10 wt% based on the weight of bisphenol in the phosgenation mixture. In another embodiment, an effective amount of phase transfer catalyst may be 0.5 to 2 wt% based on the weight of bisphenol in the phosgenation mixture.

Alternatively, melt processes may be used to make the polycarbonates. Generally, in the melt polymerization process, polycarbonates may be prepared by co-reacting, in a molten state, the dihydroxy reactant(s) and a diaryl carbonate ester, such as diphenyl carbonate, in the presence of a transesterification catalyst in a Banbury® mixer, twin screw extruder, or the like to form a uniform dispersion. Volatile monohydric phenol is removed from the molten reactants by distillation and the polymer is isolated as a molten residue.

The polycarbonate may also comprise a polysiloxane-polycarbonate copolymer, also referred to as a polysiloxane-polycarbonate. The polysiloxane (also referred to herein as "polydiorganosiloxane") blocks of the copolymer comprise repeating siloxane units (also referred to herein as "diorganosiloxane units") of formula (8):

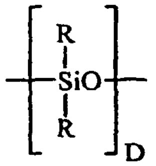

(8)

wherein each occurrence of R is same or different, and is a $C_{1-13}$ monovalent organic radical. For example, R may independently be a $C_1$-$C_{13}$ alkyl group, $C_1$-$C_{13}$ alkoxy group, $C_2$-$C_{13}$ alkenyl group, $C_2$-$C_{13}$ alkenyloxy group, $C_3$-$C_6$ cycloalkyl group, $C_3$-$C_6$ cycloalkoxy group, $C_6$-$C_{14}$ aryl group, $C_6$-$C_{10}$ aryloxy group, $C_7$-$C_{13}$ arylalkyl group, $C_7$-$C_{13}$ arylalkoxy group, $C_7$-$C_{13}$ alkylaryl group, or $C_7$-$C_{13}$ alkylaryloxy group. The foregoing groups may be fully or partially halogenated with fluorine, chlorine, bromine, or iodine, or a combination thereof. Combinations of the foregoing R groups may be used in the same copolymer.

The value of D in formula (8) may vary widely depending on the type and relative amount of each component in the thermoplastic composition, the desired properties of the composition, and like considerations. Generally, D may have an average value of 2 to 1,000, specifically 2 to 500, and more specifically 5 to 100. In one embodiment, D has an average value of 10 to 75, and in still another embodiment, D has an average value of 40 to 60. Where D is of a lower value, e.g., less than 40, it may be desirable to use a relatively larger amount of the polycarbonate-polysiloxane copolymer. Conversely, where D is of a higher value, e.g., greater than 40, it may be necessary to use a relatively lower amount of the polycarbonate-polysiloxane copolymer.

A combination of a first and a second (or more) polysiloxane-polycarbonate copolymer may be used, wherein the average value of D of the first copolymer is less than the average value of D of the second copolymer.

In one embodiment, the polydiorganosiloxane blocks are provided by repeating structural units of formula (9):

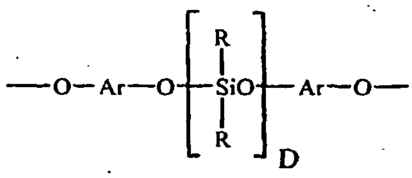

(9)

wherein D is as defined above; each R may independently be the same or different, and is as defined above; and each Ar may independently be the same or different, and is a substituted or unsubstituted $C_6$-$C_{30}$ arylene radical, wherein the bonds are directly connected to an aromatic moiety. Suitable Ar groups in formula (9) may be derived from a $C_6$-$C_{30}$ dihydroxyarylene compound, for example a dihydroxyarylene compound of formula (3); (4), or (7) above. Combinations comprising at least one of the foregoing dihydroxyarylene compounds may also be used. Specific examples of suitable dihydroxyarylene compounds are 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulphide), and 1,1-bis(4-hydroxy-t-butylphenyl) propane. Combinations comprising at least one of the foregoing dihydroxy compounds may also be used.

Units of formula (9) may be derived from the corresponding dihydroxy compound of formula (10):

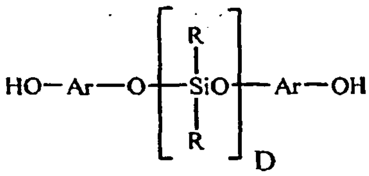

(10)

wherein R, Ar, and D are as described above. Compounds of formula (10) may be obtained by the reaction of a dihydroxyarylene compound with, for example, an alpha, omega-bisacetoxypolydiorangonosiloxane under phase transfer

conditions.

In another embodiment, polydiorganosiloxane blocks comprise units of formula (11):

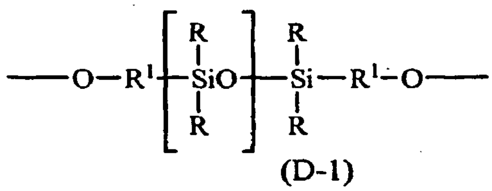

(11)

wherein R and D are as described above, and each occurrence of $R^1$ is independently a divalent $C_1$-$C_{30}$ alkylene, and wherein the polymerized polysiloxane unit is the reaction residue of its corresponding dihydroxy compound. In a specific embodiment, the polydiorganosiloxane blocks are provided by repeating structural units of formula (12):

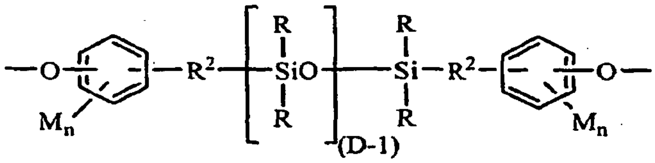

(12)

wherein R and D are as defined above. Each $R^2$ in formula (12) is independently a divalent $C_2$-$C_8$ aliphatic group. Each M in formula (12) maybe the same or different, and may be a halogen, cyano, nitro, $C_1$-$C_8$ alkylthio, $C_1$-$C_8$ alkyl, $C_1$-$C_8$ alkoxy, $C_2$-$C_8$ alkenyl, $C_2$-$C_8$ alkenyloxy group, $C_3$-$C_8$ cycloalkyl, $C_3$-$C_8$ cycloalkoxy, $C_6$-$C_{10}$ aryl, $C_6$-$C_{10}$ aryloxy, $C_7$-$C_{12}$ arylalkyl, $C_7$-$C_{12}$ arylalkoxy, $C_7$-$C_{12}$ alkylaryl, or $C_7$-$C_{12}$ alkylaryloxy, wherein each n is independently 0, 1, 2, 3, or 4.

In one embodiment, M is bromo or chloro, an alkyl group such as methyl, ethyl, or propyl, an alkoxy group such as methoxy, ethoxy, or propoxy, or an aryl group such as phenyl, chlorophenyl, or tolyl; $R^2$ is a dimethylene, trimethylene or tetramethylene group; and R is a $C_{1-8}$ alkyl, haloalkyl such as trifluoropropyl, cyanoalkyl, or aryl such as phenyl, chlorophenyl or tolyl. In another embodiment, R is methyl, or a mixture of methyl and trifluoropropyl, or a mixture of methyl and phenyl. In still another embodiment, M is methoxy, n is one, $R^2$ is a divalent $C_1$-$C_3$ aliphatic group, and R is methyl.

Units of formula (12) may be derived from the corresponding dihydroxy polydiorganosiloxane (13):

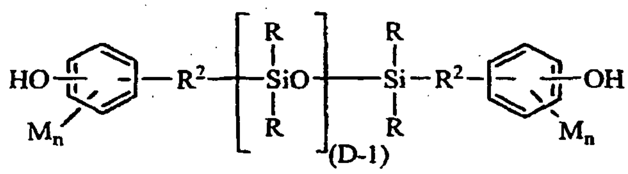

(13)

wherein R, D, M, $R^2$, and n are as described above. Such dihydroxy polysiloxanes can be made by effecting a platinum catalyzed addition between a siloxane hydride of formula (14):

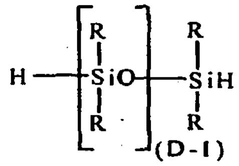

(14)

wherein R and D are as previously defined, and an aliphatically unsaturated monohydric phenol. Suitable aliphatically unsaturated monohydric phenols included, for example, eugenol, 2-allylphenol, 4-allyl-2-methylphenol, 4-allyl-2-phenylphenol, 4-allyl-2-bromophenol, 4-allyl-2-t-butoxyphenol, 4-phenyl-2-phenylphenol, 2-methyl-4-propylphenol, 2-allyl-4,6-dimethylphenol, 2-allyl-4-bromo-6-methylphenol, 2-allyl-6-methoxy-4-methylphenol and 2-allyl-4,6-dimethylphenol. Mixtures comprising at least one of the foregoing may also be used.

In another embodiment, the polysiloxane-polycarbonate may comprise 50 to 99 wt% of carbonate units and 1 to 50 wt% siloxane units. Within this range, the polysiloxane-polycarbonate copolymer may comprise 70 to 98 wt%, specifically 75 to 97 wt% of carbonate units and 2 to 30 wt%, specifically 3 to 25 wt% siloxane units.

In an embodiment, the polysiloxane-polycarbonate may have a weight average molecular weight of 2,000 to 100,000, specifically 5,000 to 50,000 as measured by gel permeation chromatography using a crosslinked styrene-divinyl benzene column, at a sample concentration of 1 milligram per milliliter, and as calibrated with polycarbonate standards.

Although not wishing to be bound to any particular theory, it is believed that there exists a synergistic effect between KSS and NaTS; and there also exists a synergistic effect between KSS, NaTS and silicone additive (SI-ADDITIVE 1 or SI-ADDITIVE 2). With NaTS/KSS/silicone additive, a transparent polycarbonate composition can pass UL 94 V0 at 3.0mm, which is the typical gage for transparent polycarbonate commercial grades. In comparison, initial experiments showed that silicone additive, KSS/ silicone additive or NaTS/ silicone additive combinations could not robustly pass UL94 V0 test at the same thickness. In one embodiment, a trend was found, that is, the higher the NaTS loading and the lower the KSS loading, the better the flame retardant performance. With KSS loading reduced from 0.3% to <0.1%, the composition can reach solid UL94 V0 at 3.0 mm for transparent PC. For example, a formulation with 0.01 phr KSS and 0.02 phr NaTS achieves V0 at 3.0mm. The cost of the composition will be lower, due to cheaper raw material and lower loading; and the composition may be suitably used to make molded and extruded articles.

In one embodiment, the disclosure provides a flame retardant composition such as a thermoplastic composition, which is transparent and free of halogen. The composition comprises:

(i) 100 parts by weight of polycarbonate;

(ii) from about 0.0001 parts to about 0.2 parts by weight of an aromatic sulfone sulfonate;

(iii) from about 0.002 parts to about 0.2 parts by weight of an aromatic sulfonate;

(iv) optionally from about 0.05 parts to about 2 parts by weight of a siloxane oligomer; and

(v) one or more optional additives selected from the group consisting of hydrolysis stabilizer, impact modifier, filler/reinforcing agent, visual effect enhancer, antioxidant, heat stabilizer, light stabilizer, ultraviolet light absorber, plasticizer, mold release agent, lubricant, antistatic agent, pigment, dye, flame retardant, processing aid, radiation stabilizer; and combinations thereof.

In various embodiments, additives ordinarily incorporated in the compositions are selected so as not to adversely affect the desired properties of the composition. Mixtures of additives may be used. Such additives may be mixed at a suitable time during the mixing of the components for forming the composition.

The composition of the disclosure may comprise one or more hydrolysis stabilizers for reducing hydrolysis of ester and/or carbonate groups. Typical hydrolysis stabilizers may include carbodiimide-based additives such as aromatic and/or cycloaliphatic monocarbodiimides substituted in position 2 and 2', such as 2,2',6,6'-tetraisopropyidiphenylcarbodiimide. Polycarbodiimides having a molecular weight of over 500 grams per mole are also suitable. Other compounds useful as hydrolysis stabilizers include an epoxy modified acrylic oligomers or polymers, and oligomers based on cycloaliphatic epoxides. Specific examples of suitable epoxy functionalized stabilizers include Cycloaliphatic Epoxide Resin ERL-4221 supplied by Union Carbide Corporation (a subsidiary of Dow Chemical), Danbury, CT; and JONCRYL® ADR-4300 and JONCRYL® ADR-4368, available from Johnson Polymer Inc, Sturtevant, WI. When present, hydrolysis stabilizers can be used in amounts of 0.05 to 1 percent by weight, specifically 0.1 to 0.5 percent by weight, and more specifically 0.12 to 0.3 percent by weight, based on the weight of the polycarbonate used in the thermoplastic composition.

The composition may comprise a colorant such as a pigment and/or dye additive. Suitable pigments include for example, inorganic pigments such as metal oxides and mixed metal oxides such as zinc oxide, titanium dioxides, iron oxides or the like; sulfides such as zinc sulfides, or the like; aluminates; sodium sulfo-silicates, sulfates, chromates, or the like; carbon blacks; zinc ferrites; ultramarine blue; Pigment Brown 24; Pigment Red 101; Pigment Yellow 119; organic pigments such as azos, di-azos, quinacridones, perylenes, naphthalene tetracarboxylic acids, flavanthrones, isoindolinones, tetrachloroisoindolinones, anthraquinones, anthanthrones, dioxazines, phthalocyanines, and azo lakes; Pigment Blue 60, Pigment Red 122, Pigment Red 149, Pigment Red 177, Pigment Red 179, Pigment Red 202, Pigment Violet 29, Pigment Blue 15, Pigment Green 7, Pigment Yellow 147 and Pigment Yellow 150, or combinations comprising at least one of the foregoing pigments. When present, pigments can be used in amounts of 0.01 to 10 percent by weight,

based on the weight of the polycarbonate used in the thermoplastic composition.

Suitable dyes can be organic materials and include, for example, coumarin dyes such as coumarin 460 (blue), coumarin 6 (green), nile red or the like; lanthanide complexes; hydrocarbon and substituted hydrocarbon dyes; polycyclic aromatic hydrocarbon dyes; scintillation dyes such as oxazole or oxadiazole dyes; aryl- or heteroaryl-substituted poly ($C_{2-8}$) olefin dyes; carbocyanine dyes; indanthrone dyes; phthalocyanine dyes; oxazine dyes; carbostyryl dyes; napthalenetetracarboxylic acid dyes; porphyrin dyes; bis(styryl)biphenyl dyes; acridine dyes; anthraquinone dyes; cyanine dyes; methine dyes; arylmethane dyes; azo dyes; indigoid dyes, thioindigoid dyes, diazonium dyes; nitro dyes; quinone imine dyes; aminoketone dyes; tetrazolium dyes; thiazole dyes; perylene dyes, perinone dyes; bis-benzoxazolylthiophene (BBOT); triarylmethane dyes; xanthene dyes; thioxanthene dyes; naphthalimide dyes; lactone dyes; fluorophores such as anti- stokes shift dyes which absorb in the near infrared wavelength and emit in the visible wavelength, or the like; luminescent dyes such as 7-amino-4-methylcoumarin; 3-(2'-benzothiazolyl)-7-diethylaminocoumarin; 2-(4-biphenylyl)-5-(4-t-butylphenyl)-1,3,4-oxadiazole; 2,5-bis-(4-biphenylyl)-oxazole; 2,2'-dimethyl-p-quaterphenyl; 2,2-dimethyl-p-terphenyl; 3,5,3'''',5''''-tetra-t-butyl-p-quinquephenyl; 2,5-diphenylfuran; 2,5-diphenyloxazole; 4,4'-diphenylstilbene; 4-dicyanomethylene-2-methyl-6-(p-dimethylaminostyryl)-4H-pyran; 1,1'-diethyl-2,2'-carbocyanine iodide; 3,3'-diethyl-4,4',5,5'-dibenzothiatricarbocyanine iodide; 7-dimethylamino-1-methyl-4-methoxy-8-azaquinolone-2; 7-dimethylamino-4-methylquinolone-2; 2-(4-(4-dimethylaminophenyl)-1,3-butadienyl)-3-ethylbenzothiazolium perchlorate; 3-diethylamino-7-diethyliminophenoxazonium perchlorate; 2-(1-naphthyl)-5-phenyloxazole; 2,2'-p-phenylen-bis(5-phenyloxazole); rhodamine 700; rhodamine 800; pyrene; chrysene; rubrene; coronene, or the like, or combinations comprising at least one of the foregoing dyes. When present, dyes can be used in amounts of 0.01 to 10 percent by weight, based on the total weight of the polycarbonate used in the thermoplastic composition.

The composition may optionally comprise an impact modifier to increase its impact resistance, where the impact modifier is present in an amount that does not adversely affect the desired properties of the composition. These impact modifiers include elastomer-modified graft copolymers comprising (i) an elastomeric (i.e., rubbery) polymer substrate having a Tg less than 10°C, more specifically less than -10°C, or more specifically -40° to -80°C, and (ii) a rigid polymeric superstrate grafted to the elastomeric polymer substrate. As is known, elastomer-modified graft copolymers may be prepared by first providing the elastomeric polymer, then polymerizing the constituent monomer(s) of the rigid phase in the presence of the elastomer to obtain the graft copolymer. The grafts may be attached as graft branches or as shells to an elastomer core. The shell may merely physically encapsulate the core, or the shell may be partially or essentially completely grafted to the core.

Suitable materials for use as the elastomer phase include, for example, conjugated diene rubbers; copolymers of a conjugated diene with less than 50 wt% of a copolymerizable monomer; olefin rubbers such as ethylene propylene copolymers (EPR) or ethylenepropylene-diene monomer rubbers (EPDM); ethylene-vinyl acetate rubbers; silicone rubbers; elastomeric $C_{1-8}$ alkyl (meth)acrylates; elastomeric copolymers of $C_{1-8}$ alkyl (meth)acrylates with butadiene and/or styrene; or combinations comprising at least one of the foregoing elastomers.

Suitable conjugated diene monomers for preparing the elastomer phase are of formula (15):

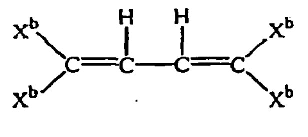

(15)

wherein each $X^b$ is independently hydrogen, $C_1$-$C_5$ alkyl, or the like. Examples of conjugated diene monomers that may be used are butadiene, isoprene, 1,3-heptadiene, methyl-1,3-pentadiene, 2,3-dimethyl-1,3-butadiene, 2-ethyl-1,3-pentadiene; 1,3- and 2,4-hexadienes, and the like, as well as mixtures comprising at least one of the foregoing conjugated diene monomers. Specific conjugated diene homopolymers include polybutadiene and polyisoprene.

Copolymers of a conjugated diene rubber may also be used, for example those produced by aqueous radical emulsion polymerization of a conjugated diene and one or more monomers copolymerizable therewith. Vinyl aromatic compounds may be copolymerized with the ethylenically unsaturated nitrile monomer to forma a copolymer, wherein the vinylaromatic compounds can include monomers of formula (16):

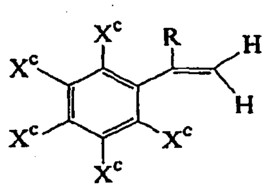

(16)

wherein each $X^c$ is independently hydrogen, $C_1$-$C_{12}$ alkyl, $C_3$-$C_{12}$ cycloalkyl, $C_6$-$C_{12}$ aryl, $C_7$-$C_{12}$ arylalkyl, $C_7$-$C_{12}$ alkylaryl, $C_1$-$C_{12}$ alkoxy, $C_3$-$C_{12}$ cycloalkoxy, $C_6$-$C_{12}$ aryloxy, chloro, bromo, or hydroxy, and R is hydrogen, $C_1$-$C_5$ alkyl, bromo, or chloro. Examples of suitable monovinylaromatic monomers that may be used include styrene, 3-methylstyrene, 3,5-diethylstyrene, 4-n-propylstyrene, alpha-methylstyrene, alpha-methyl vinyltoluene, alpha-chlorostyrene, alpha-bromostyrene, dichlorostyrene, dibromostyrene, tetra-chlorostyrene, and the like, and combinations comprising at least one of the foregoing compounds. Styrene and/or alpha-methylstyrene may be used as monomers copolymerizable with the conjugated diene monomer.

Other monomers that may be copolymerized with the conjugated diene are monovinylic monomers such as itaconic acid, acrylamide, N-substituted acrylamide or methacrylamide, maleic anhydride, maleimide, N-alkyl-, aryl-, or haloaryl-substituted maleimide, glycidyl (meth)acrylates, and monomers of the generic formula (17):

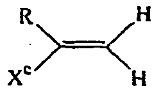

(17)

wherein R is hydrogen, $C_1$-$C_5$ alkyl, bromo, or chloro, and $X^c$ is $C_1$-$C_{12}$ alkoxycarbonyl, $C_1$-$C_{12}$ aryloxycarbonyl, hydroxy carbonyl, or the like. Examples of monomers of formula (17) include, acrylic acid, methyl (meth)acrylate, ethyl (meth) acrylate, n-butyl (meth)acrylate, t-butyl (meth)acrylate, n-propyl (meth)acrylate, isopropyl (meth)acrylate, 2-ethylhexyl (meth)acrylate, and the like, and combinations comprising at least one of the foregoing monomers. Monomers such as n-butyl acrylate, ethyl acrylate, and 2-ethylhexyl acrylate are commonly used as monomers copolymerizable with the conjugated diene monomer. Mixtures of the foregoing monovinyl monomers and monovinylaromatic monomers may also be used.

Suitable (meth)acrylate monomers suitable for use as the elastomeric phase may be cross-linked, particulate emulsion homopolymers or copolymers of $C_{1-8}$ alkyl (meth)acrylates, in particular $C_4$-$_6$ alkyl acrylates, for example n-butyl acrylate, t-butyl acrylate, n-propyl acrylate, isopropyl acrylate, 2-ethylhexyl acrylate, and the like, and combinations comprising at least one of the foregoing monomers. The $C_{1-8}$ alkyl (meth)acrylate monomers may optionally be polymerized in admixture with up to 15 wt% of comonomers of formulas (15), (16), or (17). Exemplary comonomers include but are not limited to butadiene, isoprene, styrene, methyl methacrylate, phenyl methacrylate, penethylmethacrylate, N-cyclohexylacrylamide, vinyl methyl ether, and mixtures comprising at least one of the foregoing comonomers. Optionally, up to 5 wt% of a polyfunctional crosslinking comonomer may be present, for example divinylbenzene, alkylenediol di (meth)acrylates such as glycol bisacrylate, alkylenetriol tri(meth)acrylates, polyester di(meth)acrylates, bisacrylamides, triallyl cyanurate, triallyl isocyanurate, allyl (meth)acrylate, diallyl maleate, diallyl fumarate, diallyl adipate, triallyl esters of citric acid, triallyl esters of phosphoric acid, and the like, as well as combinations comprising at least one of the foregoing crosslinking agents.

The elastomer phase may be polymerized by mass, emulsion, suspension, solution or combined processes such as bulk-suspension, emulsion-bulk, bulk-solution or other techniques, using continuous, semibatch, or batch processes. The particle size of the elastomer substrate is not critical. For example, an average particle size of 0.001 to 25 micrometers, specifically 0.01 to 15 micrometers, or even more specifically 0.1 to 8 micrometers may be used for emulsion based polymerized rubber lattices. A particle size of 0.5 to 10 micrometers, specifically 0.6 to 1.5 micrometers may be used for bulk polymerized rubber substrates. Particle size may be measured by simple light transmittance methods or capillary hydrodynamic chromatography (CHDF). The elastomer phase may be a particulate, moderately cross-linked conjugated butadiene or $C_{4-6}$ alkyl acrylate rubber, and preferably has a gel content greater than 70 wt%. Also suitable are mixtures of butadiene with styrene and/or $C_{4-6}$ alkyl acrylate rubbers.

The elastomeric phase may provide 5 to 95 wt% of the total graft copolymer, more specifically 20 to 90 wt%, and even more specifically 40 to 85 wt% of the elastomer-modified graft copolymer, the remainder being the rigid graft phase.

The rigid phase of the elastomer-modified graft copolymer may be formed by graft polymerization of a mixture comprising a monovinylaromatic monomer and optionally one or more comonomers in the presence of one or more

elastomeric polymer substrates. The above-described monovinylaromatic monomers of formula (16) may be used in the rigid graft phase, including styrene, alpha-methyl styrene, halostyrenes such as dibromostyrene, vinyltoluene, vinylxylene, butylstyrene, para-hydroxystyrene, methoxystyrene, or the like, or combinations comprising at least one of the foregoing monovinylaromatic monomers. Suitable comonomers include, for example, the above-described monovinylic monomers and/or monomers of the general formula (17). In one embodiment, R is hydrogen or $C_1$-$C_2$ alkyl, and $X^c$ is cyano or $C_1$-$C_{12}$ alkoxycarbonyl. Specific examples of suitable comonomers for use in the rigid phase include, methyl (meth)acrylate, ethyl (meth)acrylate, n-propyl (meth)acrylate, isopropyl (meth)acrylate, and the like, and combinations comprising at least one of the foregoing comonomers.

The relative ratio of monovinylaromatic monomer and comonomer in the rigid graft phase may vary widely depending on the type of elastomer substrate, type of monovinylaromatic monomer(s), type of comonomer(s), and the desired properties of the impact modifier. The rigid phase may generally comprise up to 100 wt% of monovinyl aromatic monomer, specifically 30 to 100 wt%, more specifically 50 to 90 wt% monovinylaromatic monomer, with the balance being comonomer(s).

Depending on the amount of elastomer-modified polymer present, a separate matrix or continuous phase of ungrafted rigid polymer or copolymer may be simultaneously obtained along with the elastomer-modified graft copolymer. Typically, such impact modifiers comprise 40 to 95 wt% elastomer-modified graft copolymer and 5 to 65 wt% graft (co) polymer, based on the total weight of the impact modifier. In another embodiment, such impact modifiers comprise 50 to 85 wt%, more specifically 75 to 85 wt% rubber-modified graft copolymer, together with 15 to 50 wt%, more specifically 15 to 25 wt% graft (co)polymer, based on the total weight of the impact modifier.

Another specific type of elastomer-modified impact modifier comprises structural units derived from at least one silicone rubber monomer, a branched acrylate rubber monomer having the formula $H_2C{=}C(R^d)C(O)OCH_2CH_2R^e$, wherein $R_d$ is hydrogen or a $C_1$-$C_8$ linear or branched alkyl group and Re is a branched $C_3$-$C_{16}$ alkyl group; a first graft link monomer; a polymerizable alkenyl-containing organic material; and a second graft link monomer. The silicone rubber monomer may comprise, for example, a cyclic siloxane, tetraalkoxysilane, trialkoxysilane, (acryloxy)alkoxysilane, (mercaptoalkyl)alkoxysilane, vinylalkoxysilane, or allylalkoxysilane, alone or in combination, e.g., decamethylcyclopentasiloxane, dodecamethylcyclohexasiloxane, trimethyltriphenylcyclotrisiloxane, tetramethyltetraphenylcyclotetrasiloxane, tetramethyltetravinylcyclotetrasiloxane, octaphenylcyclotetrasiloxane., octamethylcyclotetrasiloxane and/or tetraethoxysilane.

Exemplary branched acrylate rubber monomers include iso-octyl acrylate, 6-methyloctyl acrylate, 7-methyloctyl acrylate, 6-methylheptyl acrylate, and the like, alone or in combination. The polymerizable, alkenyl-containing organic material may be, for example, a monomer of formula (16) or (17), e.g., styrene, alpha-methylstyrene, or an unbranched (meth)acrylate such as methyl methacrylate, 2-ethylhexyl methacrylate, methyl acrylate, ethyl acrylate, n-propyl acrylate, or the like, alone or in combination.

The at least one first graft link monomer may be an (acryloxy)alkoxysilane, a (mercaptoalkyl)alkoxysilane, a vinylalkoxysilane, or an allylalkoxysilane, alone or in combination, e.g., (gamma-methacryloxypropyl) (dimethoxy)methylsilane and/or (3-mercaptopropyl) trimethoxysilane. The at least one second graft link monomer is a polyethylenically unsaturated compound having at least one allyl group, such as allyl methacrylate, triallyl cyanurate, or triallyl isocyanurate, alone or in combination.

The silicone-acrylate impact modifier compositions can be prepared by emulsion polymerization, wherein, for example at least one silicone rubber monomer is reacted with at least one first graft link monomer at a temperature from 30°C to 110°C to form a silicone rubber latex, in the presence of a surfactant such as dodecylbenzenesulfonic acid. Alternatively, a cyclic siloxane such as cyclooctamethyltetrasiloxane and tetraethoxyorthosilicate may be reacted with a first graft link monomer such as (gamma-methacryloxypropyl) methyldimethoxysilane, to afford silicone rubber having an average particle size from 100 nanometers to 2 micrometers. At least one branched acrylate rubber monomer is then polymerized with the silicone rubber particles, optionally in presence of a cross linking monomer, such as allylmethacrylate in the presence of a free radical generating polymerization catalyst such as benzoyl peroxide. This latex is then reacted with a polymerizable alkenyl-containing organic material and a second graft link monomer. The latex particles of the graft silicone-acrylate rubber hybrid may be separated from the aqueous phase through coagulation (by treatment with a coagulant) and dried to a fine powder to produce the silicone-acrylate rubber impact modifier composition. This method can be generally used for producing the silicone-acrylate impact modifier having a particle size from 100 nanometers to 2 micrometers.

Processes known for the formation of the foregoing elastomer-modified graft copolymers include mass, emulsion, suspension, and solution processes, or combined processes such as bulk-suspension, emulsion-bulk, bulk-solution or other techniques, using continuous, semibatch, or batch processes.

The foregoing types of impact modifiers, including SAN copolymers, can be prepared by an emulsion polymerization process that is free of basic materials such as alkali metal salts of $C_{6\text{-}30}$ fatty acids, for example sodium stearate, lithium stearate, sodium oleate, potassium oleate, and the like; alkali metal carbonates, amines such as dodecyl dimethyl amine, dodecyl amine, and the like; and ammonium salts of amines. Such materials are commonly used as surfactants

in emulsion polymerization, and may catalyze transesterification and/or degradation of polycarbonates. Instead, ionic sulfate, sulfonate or phosphate surfactants may be used in preparing the impact modifiers, particularly the elastomeric substrate portion of the impact modifiers. Suitable surfactants include, for example, $C_{1-22}$ alkyl or $C_{7-25}$ alkylaryl sulfonates, $C_{1-22}$ alkyl or $C_{7-25}$ alkylaryl sulfates, $C_{1-22}$ alkyl or $C_{7-25}$ alkylaryl phosphates, substituted silicates, and mixtures thereof. A specific surfactant is a $C_{6-16}$, specifically a $C_{8-12}$ alkyl sulfonate. In the practice, any of the above-described impact modifiers may be used providing it is free of the alkali metal salts of fatty acids, alkali metal carbonates and other basic materials.

A specific impact modifier is a methyl methacrylate-butadiene-styrene (MBS) impact modifier. Other examples of elastomer-modified graft copolymers besides ABS and MBS include but are not limited to acrylonitrile-styrene-butyl acrylate (ASA), methyl methacrylate-acrylonitrile-butadiene-styrene (MABS), and acrylonitrile-ethylenepropylene-diene-styrene (AES).

When present, impact modifiers can be present in amounts of 0.1 to 30 percent by weight, based on the weight of the polycarbonate used in the composition.

The composition may include fillers or reinforcing agents. Where used, suitable fillers or reinforcing agents include, for example, silicates and silica powders such as aluminum silicate (mullite), synthetic calcium silicate, zirconium silicate, fused silica, crystalline silica graphite, natural silica sand, or the like; boron powders such as boron-nitride powder, boron-silicate powders, or the like; oxides such as $TiO_2$, aluminum oxide, magnesium oxide, or the like; calcium sulfate (as its anhydride, dihydrate or trihydrate); calcium carbonates such as chalk, limestone, marble, synthetic precipitated calcium carbonates, or the like; talc, including fibrous, modular, needle shaped, lamellar talc, or the like; wollastonite; surface-treated wollastonite; glass spheres such as hollow and solid glass spheres, silicate spheres, cenospheres, aluminosilicate (armospheres), or the like; kaolin, including hard kaolin, soft kaolin, calcined kaolin, kaolin comprising various coatings known in the art to facilitate compatibility with the polymeric matrix resin, or the like; single crystal fibers or "whisker" such as silicon carbide, alumina, boron carbide, iron, nickel, copper, or the like; fibers (including continuous and chopped fibers) such as asbestos, carbon fibers, glass fibers, such as E, A, C, ECR, R, S, D, or NE glasses, or the like; sulfides such as molybdenum sulfide, zinc sulfide or the like; barium compounds such as barium titanate, barium ferrite, barium sulfate, heavy spar, or the like; metals and metal oxides such as particulate or fibrous aluminum, bronze, zinc, copper and nickel or the like; flaked fillers such as glass flakes, flaked silicon carbide, aluminum diboride, aluminum flakes, steel flakes or the like; fibrous fillers, for example short inorganic fibers such as those derived from blends comprising at least one of aluminum silicates, aluminum oxides, magnesium oxides, and calcium sulfate hemihydrate or the like; natural fillers and reinforcements, such as wood flour obtained by pulverizing wood, fibrous products such as cellulose, cotton, sisal, jute, starch, cork flour, lignin, ground nut shells, corn, rice grain husks or the like; organic fillers such as polytetrafluoroethylene; reinforcing organic fibrous fillers formed from organic polymers capable of forming fibers such as poly(ether ketone), polyimide, polybenzoxazole, poly(phenylene sulfide), polyesters, polyethylene, aromatic polyamides, aromatic polyimides, polyetherimides, polytetrafluoroethylene, acrylic resins, poly (vinyl alcohol) or the like; as well as additional fillers and reinforcing agents such as mica, clay, feldspar, flue dust, fillite, quartz, quartzite, perlite, tripoli, diatomaceous earth, carbon black, or the like, or combinations comprising at least one of the foregoing fillers or reinforcing agents.

The fillers and reinforcing agents may be coated with a layer of metallic material to facilitate conductivity, or surface treated with silanes to improve adhesion and dispersion with the polymeric matrix resin. In addition, the reinforcing fillers may be provided in the form of monofilament or multifilament fibers and may be used either alone or in combination with other types of fiber, through, for example, co-weaving or core/sheath, side-by-side, orange-type or matrix and fibril constructions, or by other methods known to one skilled in the art of fiber manufacture. Suitable cowoven structures include, for example, glass fiber-carbon fiber, carbon fiber-aromatic polyimide (aramid) fiber, and aromatic polyimide fiberglass fiber or the like. Fibrous fillers may be supplied in the form of, for example, rovings, woven fibrous reinforcements, such as 0-90 degree fabrics or the like; non-woven fibrous reinforcements such as continuous strand mat, chopped strand mat, tissues, papers and felts or the like; or three-dimensional reinforcements such as braids. When present, fillers can be used in amounts of 0 to 90 percent by weight, based on the weight of the polycarbonate used in the composition.

In an embodiment, the composition of the disclosure comprises glass fibers. The glass fibers are well known to those skilled in the art and are widely available from a number of manufacturers. For compositions ultimately to be employed for electrical uses, it is preferred to use fibrous glass filaments comprised of lime-aluminum borosilicate glass that is relatively sodium free. This is known as "E" glass. However, other glass compositions are useful. All such glasses are contemplated as within the scope of the present disclosure. The filaments are made by standard processes, e.g., by steam or air blowing, flame blowing and mechanical pulling. The preferred filaments for plastics reinforcement are made by mechanical pulling. The filament diameters preferably range from about 0.00012 to about 0.00075 inch, but this not critical to the present disclosure. It is known, however, to those skilled in the art, that smaller filament diameters will also increase the strength of plastics treated therewith.

The length of the glass filaments and whether or not they are bundled into fibers and the fibers bundled in turn

to yarns, ropes or rovings, or woven into mats, and the like are also not critical to the disclosure. However, in preparing the molding compositions of the present disclosure, it is convenient to use filamentous glass in the form of chopped strands of from about one-eighth to about 2 inches long. In articles molded from the compositions, on the other hand, even shorter lengths will be encountered because, during compounding, considerable fragmentation will occur.

For example, glass fibers may include Owens Corning CRATEC brand dry chopped strand fiber grade 415A (non-bonding grade with a silane sizing) (4 mm length).

Glass fibers useful in the disclosure may be treated with chemical coatings called "sizing" agents. Sizing agents may be applied to glass fiber as described, for example, in U.S. Pat. No. 6,405,759. Examples of some sizing agents include film-forming polymeric materials (e.g., low molecular weight epoxy emulsions), organosilane coupling or keying agents, cationic or nonionic lubricants, processing aids, silanes, organofunctional silanes (e.g., 3-glycidoxypropyltrimethoxy silane, 3-aminopropyltriethoxysilane and 3-methacryloxypropyltrimethoxysilane, cross-linking agents (e.g., bis-silane and antioxidants).

Visual effect enhancers, sometimes known as visual effects additives or pigments may be present in an encapsulated form, a non-encapsulated form, or laminated to a particle comprising polymeric resin. Some non-limiting examples of visual effects additives are aluminum, gold, silver, copper, nickel, titanium, stainless steel, nickel sulfide, cobalt sulfide, manganese sulfide, metal oxides, white mica, black mica, pearl mica, synthetic mica, mica coated with titanium dioxide, metal-coated glass flakes, and colorants, including but not limited, to Perylene Red. The visual effect additive may have a high or low aspect ratio and may comprise greater than 1 facet. Dyes may be employed such as Solvent Blue 35, Solvent Blue 36, Disperse Violet 26, Solvent Green 3, Anaplast Orange LFP, Perylene Red, and Morplas Red 36. Fluorescent dyes may also be employed including, but not limited to, Permanent Pink R (Color Index Pigment Red 181, from Clariant Corporation), Hostasol Red 5B (Color Index #73300, CAS # 522-75-8, from Clariant Corporation) and Macrolex Fluorescent Yellow 10GN (Color Index Solvent Yellow 160:1, from Bayer Corporation). Pigments such as titanium dioxide, zinc sulfide, carbon black, cobalt chromate, cobalt titanate, cadmium sulfides, iron oxide, sodium aluminum sulfosilicate, sodium sulfosilicate, chrome antimony titanium rutile, nickel antimony titanium rutile, and zinc oxide may be employed. Visual effect additives in encapsulated form usually comprise a visual effect material such as a high aspect ratio material like aluminum flakes encapsulated by a polymer. The encapsulated visual effect additive has the shape of a bead. When present, visual effect enhancers can be used in amounts of 0.01 to 10 percent by weight, based on the weight of the polycarbonate used in the composition.

Suitable antioxidant additives include, for example, organophosphites such as tris(nonyl phenyl)phosphite, tris (2,4-di-t-butylphenyl)phosphite, bis(2,4-di-t-butylphenyl)pentaerythritol diphosphite, distearyl pentaerythritol diphosphite or the like; alkylated monophenols or polyphenols; alkylated reaction products of polyphenols with dienes, such as tetrakis[methylene(3,5-di-tert-butyl-4-hydroxyhydrocinnamate)] methane, or the like; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate or the like; amides of beta-(3,5-di-tert-butyl-4-hydroxyphenyl)-propionic acid or the like, or combinations comprising at least one of the foregoing antioxidants. When present, antioxidants can be used in amounts of 0.0001 to 1 percent by weight, based on the weight of the polycarbonate used in the composition.

Suitable heat stabilizer additives include, for example, organophosphites such as triphenyl phosphite, tris-(2,6-dimethylphenyl)phosphite, tris-(mixed mono-and dinonylphenyl)phosphite or the like; phosphonates such as dimethylbenzene phosphonate or the like, phosphates such as trimethyl phosphate, or the like, or combinations comprising at least one of the foregoing heat stabilizers. When present, heat stabilizers can be used in amounts of 0.0001 to 1 percent by weight, based on the weight of the polycarbonate used in the composition.

Light stabilizers and/or ultraviolet light (UV) absorbing additives may also be used. Suitable light stabilizer additives include, for example, benzotriazoles such as 2-(2-hydroxy-5-methylphenyl)benzotriazole, 2-(2-hydroxy-5-tert-octylphenyl)-benzotriazole and 2-hydroxy-4-n-octoxy benzophenone, or the like, or combinations comprising at least one of the foregoing light stabilizers. When present, light stabilizers can be used in amounts of 0.0001 to 1 percent by weight, based on the weight of the polycarbonate used in the composition.

Plasticizers, lubricants, and/or mold release agents additives may also be used. There is considerable overlap among these types of materials, which include, for example, phthalic acid esters such as dioctyl-4,5-epoxy-hexahydrophthalate; tris-(octoxycarbonylethyl)isocyanurate; tristearin; di- or polyfunctional aromatic phosphates such as resorcinol tetraphenyl diphosphate (RDP), the bis(diphenyl) phosphate of hydroquinone and the bis(diphenyl) phosphate of bisphenol-A; poly-alpha-olefins; epoxidized soybean oil; silicones, including silicone oils; esters, for example, fatty acid esters such as alkyl stearyl esters, e.g., methyl stearate; stearyl stearate, pentaerythritol tetrastearate, and the like; mixtures of methyl stearate and hydrophilic and hydrophobic nonionic surfactants comprising polyethylene glycol polymers, polypropylene glycol polymers, and copolymers thereof, e.g., methyl stearate and polyethylene-polypropylene

glycol copolymers in a suitable solvent; waxes such as beeswax, montan wax, paraffin wax or the like. When present, such materials can be used in amounts of 0.001 to 1 percent by weight, specifically 0.01 to 0.75 percent by weight, more specifically 0.1 to 0.5 percent by weight, based on the weight of the polycarbonate used in the composition.

The term "antistatic agent" refers to monomeric, oligomeric, or polymeric materials that can be processed into polymer resins and/or sprayed onto materials or articles to improve conductive properties and overall physical performance. Examples of monomeric antistatic agents include glycerol monostearate, glycerol distearate, glycerol tristearate, ethoxylated amines, primary, secondary and tertiary amines, ethoxylated alcohols, alkyl sulfates, alkylarylsulfates, alkylphosphates, alkylaminesulfates, alkyl sulfonate salts such as sodium stearyl sulfonate, sodium dodecylbenzenesulfonate or the like, quaternary ammonium salts, quaternary ammonium resins, imidazoline derivatives, sorbitan esters, ethanolamides, betaines, or the like, or combinations comprising at least one of the foregoing monomeric antistatic agents.

Exemplary polymeric antistatic agents include certain polyesteramides polyetherpolyamide (polyetheramide) block copolymers, polyetheresteramide block copolymers, polyetheresters, or polyurethanes, each containing polyalkylene glycol moieties polyalkylene oxide units such as polyethylene glycol, polypropylene glycol, polytetramethylene glycol, and the like. Such polymeric antistatic agents are commercially available, for example Pelestat™ 6321 (Sanyo) or Pebax™ MH1657 (Atofina), Irgastat™ P 18 and P22 (Ciba-Geigy). Other polymeric materials that may be used as antistatic agents are inherently conducting polymers such as polyaniline (commercially available as PANIPOL®EB from Panipol), polypyrrole and polythiophene (commercially available from Bayer), which retain some of their intrinsic conductivity after melt processing at elevated temperatures. In one embodiment, carbon fibers, carbon nanofibers, carbon nanotubes, carbon black, or any combination of the foregoing may be used in a polymeric resin containing chemical antistatic agents to render the composition electrostatically dissipative. When present, antistatic agents can be used in amounts of 0.0001 to 5 percent by weight, based on the weight of the polycarbonate used in the composition.

In an embodiment, the KSS/NaTS combination of the disclosure can be optionally used with other suitable flame retardant(s), as long as there is no negative effect on the performance of the composition.

Suitable flame retardant that may be added may be organic compounds that include phosphorus, bromine, and/or chlorine. Non-brominated and non-chlorinated phosphorus-containing flame retardants may be preferred in certain applications for regulatory reasons, for example organic phosphates and organic compounds containing phosphorus-nitrogen bonds.

One type of exemplary organic phosphate is an aromatic phosphate of the formula $(GO)_3P=O$, wherein each G is independently an alkyl, cycloalkyl, aryl, alkylaryl, or arylalkyl group, provided that at least one G is an aromatic group. Two of the G groups may be joined together to provide a cyclic group, for example, diphenyl pentaerythritol diphosphate. Other suitable aromatic phosphates may be, for example, phenyl bis(dodecyl) phosphate, phenyl bis (neopentyl) phosphate, phenyl bis(3,5,5'-trimethylhexyl) phosphate, ethyl diphenyl phosphate, 2-ethylhexyl di(p-tolyl) phosphate, bis(2-ethylhexyl) p-tolyl phosphate, tritolyl phosphate, bis(2-ethylhexyl) phenyl phosphate, tri(nonylphenyl) phosphate, bis(dodecyl) p-tolyl phosphate, dibutyl phenyl phosphate, 2-chloroethyl diphenyl phosphate, p-tolyl bis(2,5,5'-trimethylhexyl) phosphate, 2-ethylhexyl diphenyl phosphate, or the like. A specific aromatic phosphate is one in which each G is aromatic, for example, triphenyl phosphate, tricresyl phosphate, isopropylated triphenyl phosphate, and the like.

Di- or polyfunctional aromatic phosphorus-containing compounds are also useful, for example, compounds of the formulas below:

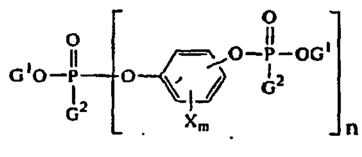

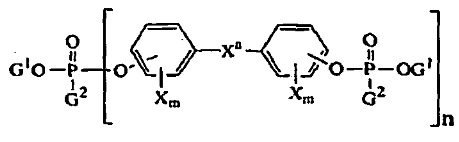

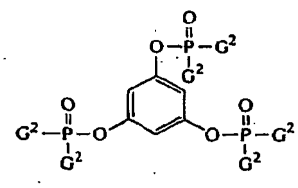

wherein each $G^1$ is independently a hydrocarbon having 1 to 30 carbon atoms; each $G^2$ is independently a hydrocarbon or hydrocarbonoxy having 1 to 30 carbon atoms; each $X^a$ is independently a hydrocarbon having 1 to 30 carbon atoms; each X is independently a bromine or chlorine; m is 0 to 4, and n is 1 to 30. Examples of suitable di- or polyfunctional aromatic phosphorus-containing compounds include resorcinol tetraphenyl diphosphate (RDP), the bis(diphenyl) phosphate of hydroquinone and the bis(diphenyl) phosphate ofbisphenol-A, respectively, their oligomeric and polymeric counterparts, and the like.

Exemplary suitable flame retardant compounds containing phosphorus-nitrogen bonds include phosphonitrilic chloride, phosphorus ester amides, phosphoric acid amides, phosphonic acid amides, phosphinic acid amides, tris (aziridinyl) phosphine oxide. When present, phosphorus-containing flame retardants can be present in amounts of 0.1 to 10 percent by weight, based on the weight of the polycarbonate used in the composition.

Additional flame retardants may also be used, for example salts of $C_{2-16}$ alkyl sulfonate salts such as potassium perfluorobutane sulfonate (Rimar salt), potassium perfluoroctane sulfonate, tetraethylammonium perfluorohexane sulfonate, and potassium diphenylsulfone sulfonate, and the like; salts formed by reacting for example an alkali metal or alkaline earth metal (for example lithium, sodium, potassium, magnesium, calcium and barium salts) and an inorganic acid complex salt, for example, an oxo-anion, such as alkali metal and alkaline-earth metal salts of carbonic acid, such as $Na_2CO_3$, $K_2CO_3$, $MgCO_3$, $CaCO_3$, and $BaCO_3$ or fluoro-anion complexes such as $Li_3AlF_6$, $BaSiF_6$, $KBF_4$, $K_3AlF_6$, $KAlF_4$, $K_2SiF_6$, and/or $Na_3AlF_6$ or the like. When present, inorganic flame retardant salts can be present in amounts of 0.1 to 5 percent by weight, based on the weight of the polycarbonate used in the composition.

Radiation stabilizers may also be present, specifically gamma-radiation stabilizers. Suitable gamma-radiation stabilizers include diols, such as ethylene glycol, propylene glycol, 1,3-propanediol, 1,2-butanediol, 1,4-butanediol, meso-2,3-butanediol, 1,2-pentanediol, 2,3-pentanediol, 1,4-pentanediol, 1,4-hexandiol, and the like; alicyclic alcohols such as 1,2-cyclopentanediol, 1,2-cyclohexanediol, and the like; branched acyclic diols such as 2,3-dimethyl-2,3-butanediol (pinacol), and the like, and polyols, as well as alkoxy-substituted cyclic or acyclic alkanes. Alkenols, with sites of unsaturation, are also a useful class of alcohols, examples of which include 4-methyl-4-penten-2-ol, 3-methyl-pentene-3-ol, 2-methyl-4-penten-2-ol, 2,4-dimethyl-4-pene-2-ol, and 9-decen-1-ol. Another class of suitable alcohols is the tertiary alcohols, which have at least one hydroxy substituted tertiary carbon. Examples of these include 2-methyl-2,4-pentanediol (hexylene glycol), 2-phenyl-2-butanol, 3-hydroxy-3-methyl-2-butanone, 2-phenyl-2-butanol, and the like" and cycoloaliphatic tertiary carbons such as 1-hydroxy-1-methylcyclohexane. Another class of suitable alcohols is hydroxymethyl aromatics, which have hydroxy substitution on a saturated carbon attached to an unsaturated carbon in an aromatic ring. The hydroxy substituted saturated carbon may be a methylol group ($-CH_2OH$) or it may be a member of a more complex hydrocarbon group such as would be the case with ($-CR^4HOH$) or ($-CR^4_2OH$) wherein $R^4$ is a complex or a simple hydrocarbon. Specific hydroxy methyl aromatics may be benzhydrol, 1,3-benzenedimethanol, benzyl alcohol, 4-benzyloxy benzyl alcohol and benzyl benzyl alcohol. Specific alcohols are 2-methyl-2,4-pentanediol (also known as hexylene glycol), polyethylene glycol, and polypropylene glycol. When present, radiation stabilizers are typically used in amounts of 0.001 to 1 wt %, more specifically 0.01 to 0.5 wt%, based on the weight of the polycarbonate used in the composition.

Non-limiting examples of processing aids that can be used include Doverlube® FL-599 (available from Dover Chemical Corporation), Polyoxyter® (available from Polychem Alloy Inc.), Glycolube P (available from Lonza Chemical Company), pentaerythritol tetrastearate, Metablen A-3000 (available from Mitsubishi Rayon), neopentyl glycol dibenzoate, and the like. When present, processing aids can be used in amounts of 0.001 to 1 percent by weight, based on the weight of the polycarbonate used in the composition.

The composition may be manufactured by methods generally available in the art, for example, in one embodiment, in one manner of proceeding, powdered polycarbonate, and any optional additive(s) are first blended, in a HENSCHEL-Mixer® high speed mixer. Other low shear processes including but not limited to hand mixing may also accomplish this blending. The blend is then fed into the throat of an extruder via a hopper. Alternatively, one or more of the components may be incorporated into the composition by feeding directly into the extruder at the throat and/or downstream through a sidestuffer. Additives may also be compounded into a masterbatch with a desired polymeric resin and fed into the extruder. The extruder is generally operated at a temperature higher than that necessary to cause the composition to flow. The extrudate is immediately quenched in a water batch and pelletized. The pellets, so prepared, when cutting the extrudate may be one-fourth inch long or less as desired. Such pellets may be used for subsequent molding, shaping,

or forming.

In a specific embodiment, a method of preparing a thermoplastic article comprises melt combining a polycarbonate, and any optional additive(s), to form a thermoplastic composition. The melt combining can be done by extrusion. In an embodiment, the proportions of polycarbonate, and any optional additive(s) are selected such that the optical properties of the composition are maximized while mechanical performance is at a desirable level.

In a specific embodiment, the extruder is a twin-screw extruder. The extruder is typically operated at a temperature of 180 to 385°C, specifically 200 to 330°C, more specifically 220 to 300°C, wherein the die temperature may be different. The extruded composition is quenched in water and pelletized.

Shaped, formed, or molded articles comprising the compositions are also provided. The compositions may be molded into useful shaped articles by a variety of means such as injection molding, extrusion, rotational molding, blow molding and thermoforming. In a specific embodiment, molding is done by injection molding. Desirably, the thermoplastic composition has excellent mold filling capability and is useful to form electronic parts, mechanical parts and automobile parts.

Unless specified differently, the flame retardancy of the compositions disclosed herein was determined by UL 94 Flammability Testing standards. In this regard, there are generally two types of pre-selection test programs conducted by Underwriters Laboratory (UL) on plastic materials to measure flammability characteristics. The first determines the material's tendency either to extinguish or to spread the flame once the specimen has been ignited. This program is described in UL 94, The Standard for Flammability of Plastic Materials for Parts in Devices and Appliances, which is now harmonized with IEC 60707, 60695-11-10 and 60695-11-20 and ISO 9772 and 9773, which is incorporated fully herein by reference.

The second test program measures the ignition resistance of the plastic to electrical ignition sources. The material's resistance to ignition and surface tracking characteristics is described in UL 746A, which is similar to the test procedures described in IEC 60112, 60695 and 60950.

With respect to UL 94, there are 12 flame classifications specified therein that are assigned to materials based on the results of small-scale flame tests. These classifications, listed below in descending order of flammability, are used to distinguish a material's burning characteristics after test specimens have been exposed to a specified test flame under controlled laboratory conditions.

Six of the classifications relate to materials commonly used in manufacturing enclosures, structural parts and insulators found in consumer electronic products (5VA, 5VB, V-0, V-1, V-2, HB).

Three of the remaining six classifications relate to low-density foam materials commonly used in fabricating speaker grills and sound-deadening material (HF-1, HF-2, HBF).

The last three classifications are assigned to very thin films, generally not capable of supporting themselves in a horizontal position (VTM-0, VTM-1, VTM-2). These are usually assigned to substrates on flexible printed circuit boards.

During testing, specimens molded from the plastic material are oriented in either a horizontal or vertical position, depending on the specifications of the relevant test method, and are subjected to a defined flame ignition source for a specified period of time. In some tests, the test flame is only applied once, as is the case of the horizontal burning (HB) test, while in other tests the flame is applied twice or more.

A HB flame rating indicates that the material was tested in a horizontal position and found to bum at a rate less than a specified maximum. The three vertical ratings, V2, V1 and V0 indicate that the material was tested in a vertical position and self-extinguished within a specified time after the ignition source was removed. The vertical ratings also indicate whether the test specimen dripped flaming particles that ignited a cotton indicator located below the sample. UL 94 also describes a method in which the test flame is applied for up to five applications, in testing for a 5VA or 5VB classification. These small-scale tests measure the propensity of a material to extinguish or spread flames once it becomes ignited.

A more detailed explanation of the parameters for a UL 94 V0 flammability rating utilized herein are set forth below.

The disclosure is further illustrated by the following non-limiting examples.

## EXAMPLES

Different amounts of flame-retardant additives and polycarbonates were added together and pre-blended according to the formulas noted in the Table below. Unless mentioned, the examples were based upon 100 parts by weight polycarbonate, or blends of polycarbonates such as blends of high, normal, or low flow polycarbonates. The high flow polycarbonate used was Bisphenol-A polycarbonate prepared by the interfacial method with a target molecular weight of 21,900 (based on Gel Permeation chromatography measurements using polycarbonate standards), and the normal flow polycarbonate used was Bisphenol-A polycarbonate prepared by the interfacial method with a target molecular weight of 29,900 (based on Gel Permeation chromatography measurements using polycarbonate standards). In the following examples, the mold release agent was pentaethyritol tetrastearate, and the heat stabilizer was IRGAPHOS™

168 (tris(2,4-di-t-butylphenyl) phosphite). Extrusion and molding was carried out under normal polycarbonate processing conditions.

Flammability testing was conducted using the statistical "UL Tool" in which 5 bars, at the specified thickness, were burned using the UL94 test protocol. The table below shows the pass criteria for V0 under UL94 standards.

| Test Type | UL 94V0 |
|---|---|
| Each flame out time (t1 or t2) | <=10s |
| Total afterflame time for 5 specimen (t1 + t2) | <=50 |
| Afterflame or afterglow time for each specimen (t2+t3) | <=30s |
| Afterflame or afterglow up to the holding clamp | No |
| Cotton Ignited | No |

A set of experiments was performed using different formulations of polycarbonates (including high flow and low flow polycarbonates) with combinations of silicone additives (SI-ADDITIVE 1 or SI-ADDITIVE 2), potassium diphenylsulfone sulfonate (KSS) and sodium toluene sulfonic acid (NaTS). Since KSS and NaTS were present in low loadings, they were mixed and dissolved in deionized water, and the aqueous solution was then dispersed into polycarbonate powder.

It is known that KSS has relatively poor flame retardance performance when it is used alone. NaTS, on the other hand, because of its even poorer performance than KSS, is seldom used in commercial grades. Comparative examples in Table 1 clearly show that KSS or NaTS itself (Comp. Ex.1-2, 1-3 and 1-6) failed UL 94 V0 rating at 3.0 mm. Also not surprisingly, a composition without any flame retardant additive (Comp. Ex.1-1) also failed the V0 flammability rating at the same thickness. Furthermore, the data indicated that those compositions with combination of flame retardant salt (either KSS or NaTS) and silicone additive also failed V0 rating at the same thickness.

Table 1 (Comparative)

| | Comp. Ex.1-1 | Comp. Ex.1-2 | Comp. Ex.1-3 | Comp. Ex.1-4 | Comp. Ex.1-5 | Comp. Ex.1-6 | Comp. Ex.1-7 | Comp. Ex.1-8 | Comp. Vex. 1-9 | comp. Ex.1-10 |
|---|---|---|---|---|---|---|---|---|---|---|
| High Flow PC | 30 | 30 | 30 | 30 | 30 | 30 | 30 | 30 | 30 | 30 |
| Normal Flow PC | 70 | 70 | 70 | 70 | 70 | 70 | 70 | 70 | 70 | 70 |
| Heat stabilizer | 0.03 | 0.03 | 0.03 | 0.03 | 0.03 | 0.03 | 0.03 | 0.03 | 0.03 | 0.03 |
| Mold Release | 0.35 | 0.35 | 0.35 | 0.35 | 0.35 | 0.35 | 0.35 | 0.35 | 0.35 | 0.35 |
| NaTS | | 0.02 | 0.3 | 0.3 | 0.3 | | | | | |
| KSS | | | | | | 0.07 | 0.175 | 0.25 | 0.3 | 0.3 |
| SI-ADDITIVE 1 | | | | | | | 0.6 | 0.7 | | |
| SI-ADDITIVE 2 | | | | 0.5 | 0.8 | | | | 0.5 | 0.8 |
| UL 94 rating @ 3.0mm | FAIL | FAIL | FAIL | FAIL | FAIL | FAIL | FAIL | FAIL | FAIL | FAIL |

Though neither NaTS nor KSS can achieve UL 94 V0 rating when they are used alone, it has been found that KSS/NaTS combinations resulted in good flame retardance performance, as shown in Table 2. Those examples (examples 2-1 and 2-2) achieved robust V0 ratings at 3.0 mm. On the other hand, the flame retardancy performance of KSS/NaTS systems can be further improved with silicone additive (SI-ADDITIVE 1 or SI-ADDITIVE 2, the later one is described in General Electric Co.'s Published Patent Application US20020099160A1). In Table 2, examples 2-3, 2-4, 2-5, and 2-6 contained NaTS, KSS and Si-additive, and robust UL 94 V0 at 3.0 mm ratings were achieved.

Table 2

| | Exp. 2-1 | Exp. 2-2 | Exp. 2-3 | Exp. 2-4. | Exp. 2-5 | Exp. 2-6 |
|---|---|---|---|---|---|---|
| High Flow PC | 10 | 30 | 10 | 30 | 30 | 30 |
| Normal Flow PC | 90 | 70 | 90 | 70 | 70 | 70 |
| Heat Stabilizer | 0.03 | 0.03 | 0.03 | 0.03 | 0.03 | 0.03 |
| Mold Release | 0.35 | 0.35 | 0.35 | 0.35 | 0.35 | 0.35 |
| NaTS | 0.02 | 0.03 | 0.0125 | 0.025 | 0.025 | 0.025 |
| KSS | 0.01 | 0.008 | 0.02 | 0.005 | 0.005 | 0.005 |
| SI-ADDITIVE 1 | | | 0.8 | 0.4 | 0.8 | |
| SI-ADDITIVE 2 | | | | | | 0.4 |
| DI water | 0.2 | 0.2 | 0.2 | 0.2 | 0.2 | 0.2 |
| UL 94 vo @ 3.0mm | PASS | PASS | PASS | PASS | PASS | PASS |

Additionally, it was noted that silicone additives by themselves exhibited very poor flame retardancy performance, as shown in Table 3.

Table 3 (Comparative)

| | Comp. Ex. 3-1 | Comp. Ex. 3-2 | Comp. Ex. 3-3 | Comp. Ex. 3-4 |
|---|---|---|---|---|
| High Flow PC | 30.00 | 30.00 | 30.00 | 30.00 |
| Normal Flow PC | 70.00 | 70.00 | 70.00 | 70.00 |
| Heat stabilizer | 0.03 | 0.03 | 0.03 | 0.03 |
| Mold Release | 0.35 | 0.35 | 0.35 | 0.35 |
| SI-ADDITIVE 1 | 0.00 | 0.60 | 0.70 | 0.80 |
| UL 94 V0 @ 3.0mm | FAIL | FAIL | FAIL | FAIL |

A further set of experiments was performed at very low loadings of 0.02 phr NaTS with 0.03-0.07 phr KSS and 0.5-1 phr SI-ADDITIVE 1 with the consideration of both flame performance and optical properties. Table 4 shows that, within those ranges, all the formulations exhibited very robust UL 94 V0 @ 3.0 mm ratings. Some of the formulations even showed robust UL94 V0 @ 2.5 mm ratings.

Table 4

| | Exp. 4-1 | Exp. 4-2 | Exp. 4-3 | Exp. 4-4 | Exp. 4-5 | Exp. 4-6 | Exp. 4-7 | Exp. 4-8 | Exp. 4-9 |
|---|---|---|---|---|---|---|---|---|---|
| High Flow PC | 30 | 30 | 30 | 30 | 30 | 30 | 30 | 30 | 30 |
| Normal Flow PC | 70 | 70 | 70 | 70 | 70 | 70 | 70 | 70 | 70 |
| Heat Stabilizer | 0.03 | 0.03 | 0.03 | 0.03 | 0.03 | 0.03 | 0.03 | 0.03 | 0.03 |
| NaTS | 0.02 | 0.02 | 0.02 | 0.02 | 0.02 | 0.02 | 0.02 | 0.02 | 0.02 |
| KSS | 0.03 | 0.03 | 0.03 | 0.05 | 0.05 | 0.05 | 0.07 | 0.07 | 0.07 |

(continued)

| | Exp. 4-1 | Exp. 4-2 | Exp. 4-3 | Exp. 4-4 | Exp. 4-5 | Exp. 4-6 | Exp. 4-7 | Exp. 4-8 | Exp. 4-9 |
|---|---|---|---|---|---|---|---|---|---|
| SI-ADDITIVE 1 | 0.5 | 0.75 | 1 | 0.5 | 0.75 | 1 | 0.5 | 0.75 | |
| DI water | 0.2 | 0.2 | 0.2 | 0.2 | 0.2 | 0.2 | 0.2 | 0.2 | 0.2 |
| UL 94 V0 @ 3.0mm | PASS | PASS | PASS | PASS | PASS | PASS | PASS | PASS | PASS |
| UL 94 V0 @ 2.5mm | PASS | PASS | PASS | PASS | PASS | PASS | FAIL | PASS | PASS |

The optical properties of these formulations were good as well. As shown in Table 5, these formulations showed low haze and high transmittance.

Table 5

| | 1mm | | 2mm | | 3mm | |
|---|---|---|---|---|---|---|
| | Haze (%) | Transmittance (%) | Haze (%) | Transmittance (%) | Haze (%) | Transmittance (%) |
| Exp.4-2 | 0.9 | 91.6 | 1.2 | 91.3 | 1.3 | 91.0 |
| Exp.4-4 | 0.9 | 91.4 | 1.2 | 91.0 | 1.4 | 90.5 |

The optical properties are very important for transparent applications. Table 6 shows the impact of KSS and NaTS on transmittance and haze. Basically, the higher the KSS loading and the lower the NaTS loading, the higher transmittance and the lower haze. Transfer functions were also obtained by the regression analysis and exhibited a good fit.

Table 6

| | Exp. 6-1 | Exp. 6-2 | Exp. 6-3 | Exp. 6-4 | Exp. 6-5 | Exp. 6-6 |
|---|---|---|---|---|---|---|
| NaTS (phr) | 0.03 | 0.03 | 0.06 | 0.09 | 0.09 | 0.06 |
| KSS (phr) | 0.03 | 0.09 | 0.06 | 0.03 | 0.09 | 0.06 |
| T @ 1mm (%) | 91.3 | 91.4 | 91.0 | 90.3 | 90.6 | 87.1 |
| H @ 1mm (%) | 2.4 | 2.1 | 3.1 | 4.5 | 3.9 | 19.1 |
| T @ 2mm (%) | 90.7 | 90.8 | 89.9 | 88.7 | 89.0 | 82.0 |
| H @ 2mm (%) | 2.3 | 1.8 | 3.5 | 6.4 | 4.5 | 32.5 |
| T @ 3mm (%) | 90.0 | 90.1 | 88.7 | 87.1 | 87.4 | 77.0 |
| H @ 3mm (%) | 1.9 | 1.2 | 3.7 | 8.1 | 5.4 | 42.7 |

Regression analysis: The regression equation is

$$H\ @\ 3mm = 0.56 + 86.7\ NaTS - 28.3\ KSS$$

S = 0.7622 R-Sq = 96.3% R-Sq(adj) = 92.5%

$$T\ @\ 3mm = 91.3 - 46.7\ NaTS - 3.33\ KSS$$

$$S = 0.07746 \qquad R\text{-}Sq = 99.8\% \qquad R\text{-}Sq(adj) = 99.7\%$$

## Claims

1. A flame retardant composition comprising (i) 100 parts by weight of polycarbonate; (ii) from 0.0001 parts to 0.2 parts by weight of an aromatic sulfone sulfonate; (iii) from 0.002 parts to 0.2 parts by weight of an aromatic sulfonate; (iv) optionally from 0.05 parts to 2 parts by weight of a siloxane oligomer, wherein a molded sample of the composition is able to achieve a UL 94 V0 rating at a thickness of 3.0 mm.

2. The flame retardant composition of claim 1, wherein a molded sample of the composition is able to achieve a UL 94 V0 rating at a thickness of 2.5 mm.

3. The flame retardant composition according to claim 1, in which the aromatic sulfone sulfonate comprises a formula (K-1) compound:

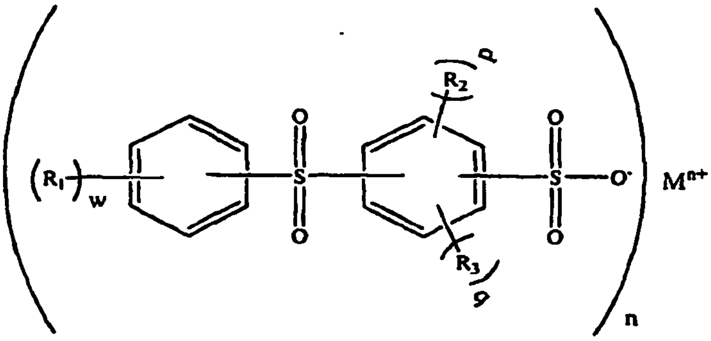

(K-1),

wherein $R_1$, $R_2$, and $R_3$ are independently selected from a $C_1$-$C_6$ alkyl group; M is a metal; n is an integer and $1 \leq n \leq 3$; w is an integer and $0 \leq w \leq 5$; p and q are integers, $p \geq 0$ $q \geq 0$, and $p+q \leq 4$.

4. The flame retardant composition according to claim 1, in which the aromatic sulfone sulfonate comprises a formula (K-2) compound or potassium diphenylsulfone sulfonate (KSS):

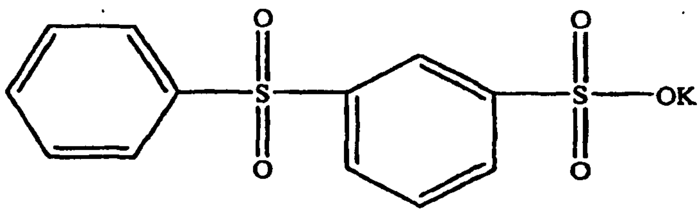

(K-2).

5. The flame retardant composition according to claim 1, in which the aromatic sulfonate comprises a formula (N-1) compound:

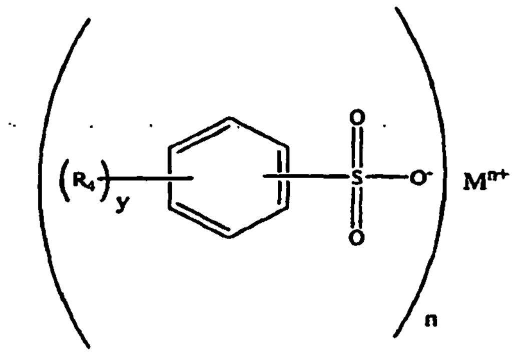

(N-1),

wherein $R_4$ is selected from a $C_1$-$C_6$ alkyl group; M is a metal; n is an integer and $1 \leq n \leq 3$; y is an integer and $0 \leq y \leq 5$.

6. The flame retardant composition according to claim 1, in which the aromatic sulfonate comprises a formula (N-2) compound or a sodium salt of toluene sulfonic acid (NaTS):

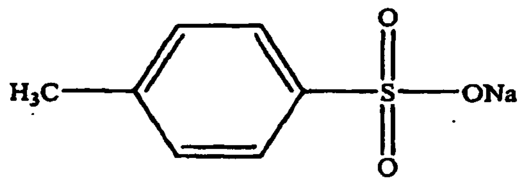

(N-2).

7. The flame retardant composition according to claim 1, in which the siloxane oligomer comprises a formula (P-1) compound:

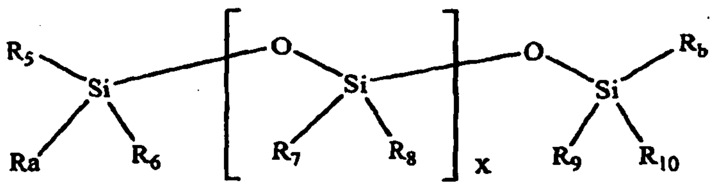

(P-1)

wherein $R_5$, $R_6$, $R_7$, $R_8$, $R_9$, $R_{10}$, $R_a$ and $R_b$ are independently selected from a $C_1$-$C_8$ alkyl group such as methyl and ethyl, or an arylalkyl group such as phenylmethyl, phenylethyl, and phenylpropyl, or an aryl group such as phenyl; x is an integer; and $1 \leq x \leq 10$.

8. The flame retardant composition according to claim 1, in which the siloxane oligomer comprises a formula (P-2) compound:

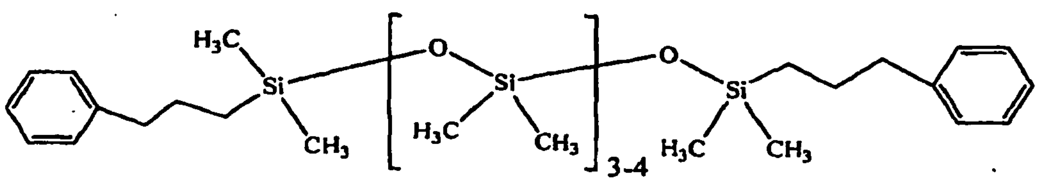

(P-2).

9. The flame retardant composition according to claim 1, further comprising a Si-additive having the formula as shown below:

$$R^1_aSi(OR^2)_bO_{(4-a-b)/2}$$

where $R^1$ is a substituted or unsubstituted univalent hydrocarbon group containing an aryl group as an essential component; $R^2$ is a substituted or unsubstituted univalent hydrocarbon group; $R^1$ and $R^2$ may be the same as or different from each other; $0.2 \leq a \leq 2.7$; $0.2 \leq b \leq 2.4$; and $a+b<3$.

**10.** The flame retardant composition according to claim 1, which comprises (i) 100 parts by weight of polycarbonate; (ii) from 0.0001 parts to 0.2 parts by weight of KSS; (iii) from 0.002 parts to 0.2 parts by weight of NaTS; and (iv) optionally from 0.05 parts to 2 parts by weight of bi-phenylpropyl dimethicone.

**11.** The flame retardant composition according to claim 10, which comprises from 0.01 parts to 0.08 parts by weight of KSS; from 0.01 parts to 0.08 parts by weight of NaTS; and from 0.3 parts to 0.8 parts by weight of bi-phenylpropyl dimethicone.

**12.** The flame retardant composition according to claim 1, in which the polycarbonate comprises repeating structural carbonate units of the formula (A-2):

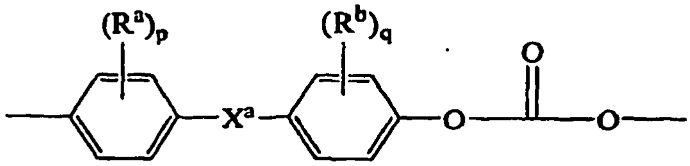

(A-2)

wherein $R^a$ and $R^b$ each represent a halogen atom or a monovalent hydrocarbon group and may be the same or different; p and q are each independently integers of 0 to 4; and $X^a$ represents one of the groups of formula (5):

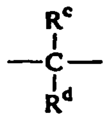

or

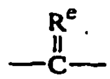

(5)

wherein $R^c$ and $R^d$ each independently represent a hydrogen atom or a monovalent linear or cyclic hydrocarbon group and $R^e$ is a divalent hydrocarbon group.

**13.** The flame retardant composition of claim 1, wherein the polycarbonate comprises repeating structural units of the formula (A-2)

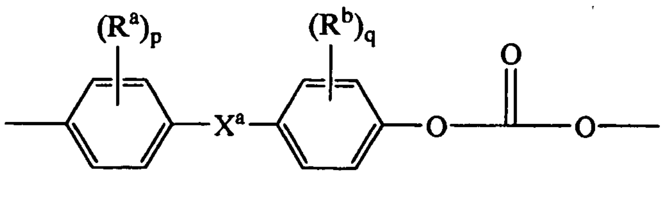

(A-2)

wherein $X^a$ is cyclohexane and $R^a$ and $R^b$ are each methyl, and p and q are each 1.

**14.** A flame retardant article made from the composition according to claim 1, which is substantially transparent and free of halogen.

**15.** The flame retardant article of claim 14, wherein the composition also exhibits light transmittance of 90% or more.

## Patentansprüche

1. Eine Flammverzögerungszusammensetzung, die Folgendes umfasst: (i) 100 Gewichtsanteile Polycarbonat, (ii) von 0,0001 Gewichtsanteile bis 0,2 Gewichtsanteile eines aromatischen Sulfonsulfonats, (iii) von 0,002 Gewichtsanteile bis 0,2 Gewichtsanteile eines aromatischen Sulfonats, (iv) wahlweise von 0,05 Gewichtsanteile bis 2 Gewichtsanteile eines Siloxanoligomers, worin eine geformte Probe der Zusammensetzung bei einer Dicke von 3,0 mm einen UL 94 V0-Wert erziele kann.

2. Die Flammverzögerungszusammensetzung gemäß Anspruch 1, worin eine geformte Probe der Zusammensetzung einen UL 94 V0-Wert mit einer Dicke von 2,5 mm erzielen kann.

3. Die Flammverzögerungszusammensetzung gemäß Anspruch 1, worin das aromatische Sulfonsulfonat eine Verbindung mit der Formel (K-1) umfasst:

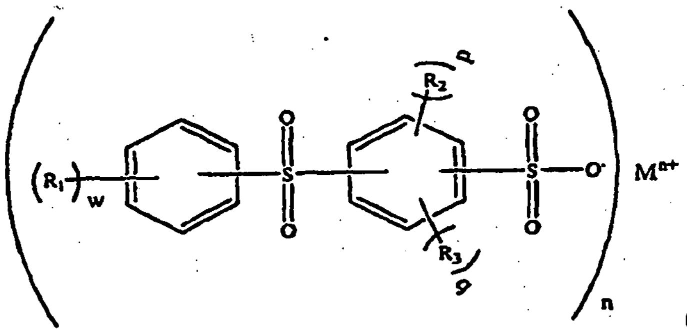

(K-1),

worin $R_1$, $R_2$ und $R_3$ unabhängig aus einer $C_1$-$C_6$-Alkylgruppe gewählt sind, M ein Metall ist, n eine ganze Zahl ist und $1 \leq n \leq 3$, w eine ganze Zahl ist und $0 \leq w \leq 5$; p und q ganze Zahlen sind, $p \geq 0$, $q \geq 0$ und $p+q \leq 4$.

4. Die Flammverzögerungszusammensetzung gemäß Anspruch 1, worin das aromatische Sulfonsulfonat eine Verbindung mit der Formel (K-2) oder Kaliumdiphenylsulfonsulfonat (KSS) umfasst:

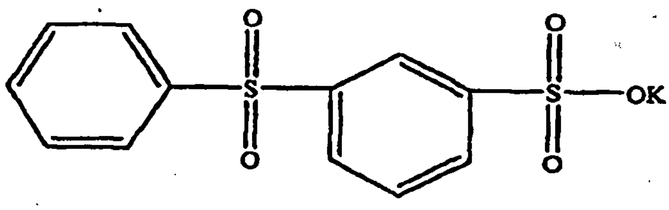

(K-2).

5. Die Flammverzögerungszusammensetzung gemäß Anspruch 1, worin das aromatische Sulfonat eine Verbindung mit der Formel (N-1) umfasst:

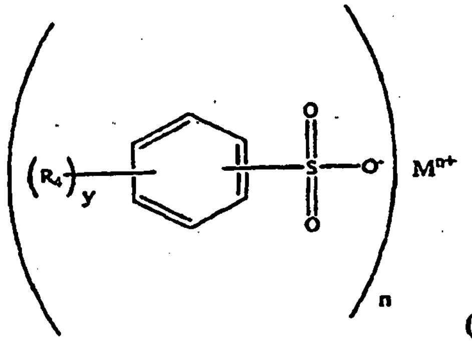

(N-1),

worin $R_4$ gewählt ist aus einer $C_1$-$C_6$-Alkylgruppe, M ein Metall ist, n eine ganze Zahl ist und $1 \leq n \leq 3$, y eine ganze Zahl ist und $0 \leq y \leq 5$.

**6.** Die Flammverzögerungszusammensetzung gemäß Anspruch 1, worin das aromatische Sulfonat eine Verbindung mit der Formel (N-2) oder ein Natriumsalz von Toluensulfonsäure (NaTS) umfasst:

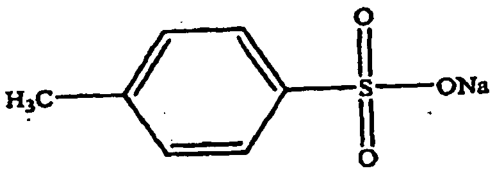

(N-2).

**7.** Die Flammverzögerungszusammensetzung gemäß Anspruch 1, worin das Siloxanoligomer eine Verbindung mit der Formel (P-1) umfasst:

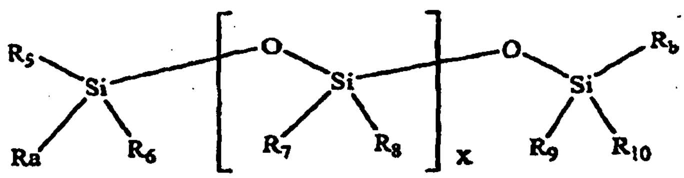

(P-1)

worin $R_5$, $R_6$, $R_7$, $R_8$, $R_9$, $R_{10}$, $R_a$ und $R_b$ unabhängig gewählt sind aus einer $C_1$-$C_8$-Alkylgruppe, wie zum Beispiel Methyl und Ethyl, oder einer Arylalkylgruppe, wie zum Beispiel Phenylethyl, Phenylethyl und Phenylpropyl, oder einer Arylgruppe, wie zum Beispiel Phenyl; x eine ganze Zahl ist und $1 \leq x \leq 10$.

**8.** Die Flammverzögerungszusammensetzung gemäß Anspruch 1, worin das Siloxanoligomer eine Verbindung mit der Formel (P-2) umfasst:

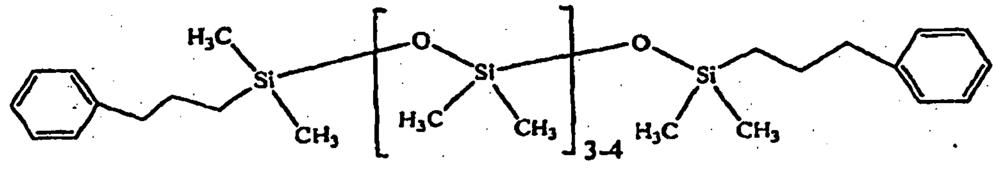

(P-2).

9. Die Flammverzögerungszusammensetzung gemäß Anspruch 1, die weiter einen Si-Zusatzstoff mit folgender Formel umfasst:

$$R^1_aSi(OR^2)_bO_{(4-a-b)/2}$$

worin $R^1$ eine substituierte oder unsubstituierte einwertige Kohlenwasserstoffgruppe ist, die eine Arylgruppe als essentielle Komponente enthält, $R^2$ eine substituierte oder unsubstituierte einwertige Kohlenwasserstoffgruppe ist, $R^1$ und $R^2$ identisch oder unterschiedlich sein können, $0{,}2\leq a\leq 2{,}7$; $0{,}2\leq b\leq 2{,}4$ und $a+b<3$.

10. Die Flammverzögerungszusammensetzung gemäß Anspruch 1, die Folgendes umfasst: (i) 100 Gewichtsanteile Polycarbonat, (ii) von 0,0001 Gewichtsanteile bis 0,2 Gewichtsanteile KSS, (iii) von 0,002 Gewichtsanteile bis 0,2 Gewichtsanteile NaTS und (iv) wahlweise von 0,05 Gewichtsanteile bis 2 Gewichtsanteile Biphenylpropyldimethicon.

11. Die Flammverzögerungszusammensetzung gemäß Anspruch 10, die von 0,01 Gewichtsanteile bis 0,08 Gewichtsanteile KSS, von 0,01 Gewichtsanteile bis 0,08 Gewichtsanteile NaTS und von 0,3 Gewichtsanteile bis 0,8 Gewichtsanteile Biphenylpropyldimethicon umfasst.

12. Die Flammverzögerungszusammensetzung gemäß Anspruch 1, worin das Polycarbonat sich wiederholende strukturelle Carbonateinheiten mit der Formel (A-2) umfasst:

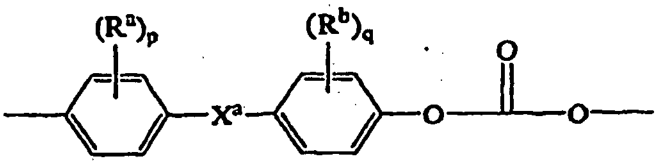

(A-2)

worin $R^a$ und $R^b$ jeweils ein Halogenatom oder eine einwertige Kohlenwasserstoffgruppe darstellen und gleich oder verschieden sein können, p und q jeweils unabhängig ganze Zahlen von 0 bis 4 sind und $X^a$ eine der Gruppen mit der Formel (5) darstellt:

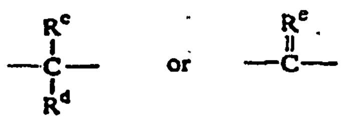

(5)

worin $R^c$ und $R^d$ jeweils unabhängig ein Wasserstoffatom oder eine einwertige lineare oder zyklische Kohlenwasserstoffgruppe darstellen und $R^e$ eine zweiwertige Kohlenwasserstoffgruppe ist.

13. Die Flammverzögerungszusammensetzung gemäß Anspruch 1,
worin das Polycarbonat sich wiederholende strukturelle Einheiten mit der Formel (A-2) umfasst

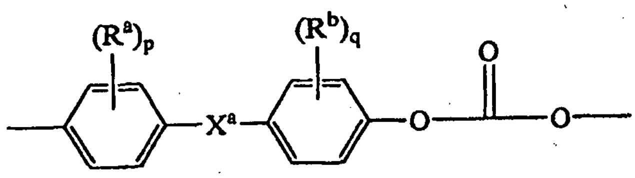

(A-2)

worin $X^a$ Cyclohexan ist und $R^a$ und $R^b$ jeweils Methyl sind und p und q jeweils 1 sind.

14. Ein Flammverzögerungsartikel, hergestellt aus der Zusammensetzung gemäß Anspruch 1, der im Wesentlichen transparent und frei von Halogen ist.

15. Der Flammverzögerungsartikel gemäß Anspruch 14, worin die Zusammensetzung auch eine Lichtdurchlässigkeit von 90% oder mehr aufweist.

**Revendications**

1. Composition ignifuge, comprenant (i) 100 parties en poids de polycarbonate ; (ii) de 0,0001 partie à 0,2 partie en poids d'un sulfone sulfonate aromatique ; (iii) de 0,002 partie à 0,2 partie en poids d'un sulfonate aromatique ; (iv) en option de 0,05 partie à 2 parties en poids d'un siloxane oligomère, dans lequel un échantillon moulé de la composition est en mesure d'atteindre un classement UL 94 V0 à une épaisseur de 3,0 mm.

2. Composition ignifuge selon la revendication 1, dans laquelle un échantillon moulé de la composition est en mesure d'atteindre un classement UL 94 V0 à une épaisseur de 2,5 mm.

3. Composition ignifuge selon la revendication 1, dans laquelle le sulfone sulfonate aromatique comprend un composé de formule (K-1) :

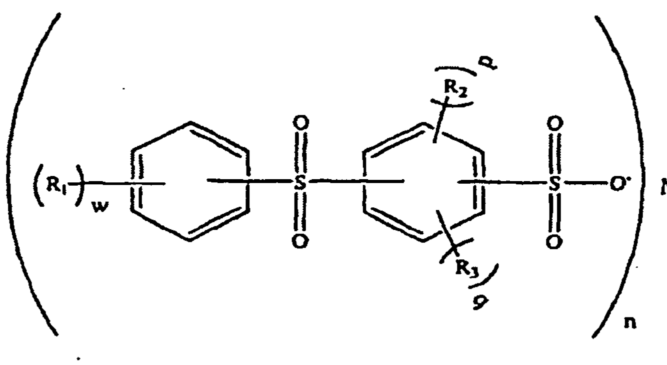

(K-1),

dans laquelle $R_1$, $R_2$ et $R_3$ sont sélectionnés indépendamment à partir d'un groupe alkyle en $C_1$ à $C_6$; M est un métal ; n est un entier et $1 \leq n \leq 3$ ; w est un entier et $0 \leq w \leq 5$ ; p et q sont des entiers, $p \geq 0$, $q \geq 0$, et $p+q \leq 4$.

4. Composition ignifuge selon la revendication 1, dans laquelle le sulfone sulfonate aromatique comprend un composé de formule (K-2), ou un potassium diphénylsulfone sulfonate (KSS) :

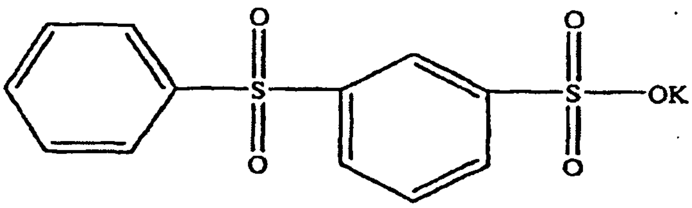

(K-2).

5. Composition ignifuge selon la revendication 1, dans laquelle le sulfonate aromatique comprend un composé de formule (N-1) :

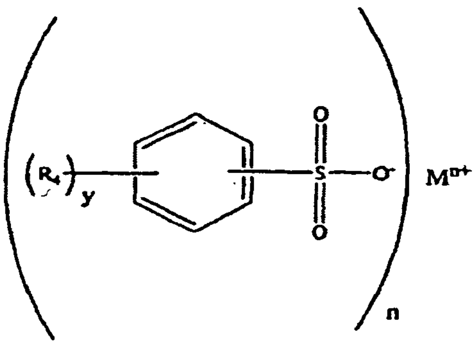

(N-1),

dans laquelle $R_4$ est sélectionné à partir d'un groupe alkyle en $C_1$ à $C_6$ ; M est un métal ; n est un entier et $1 \leq n \leq 3$ ; y est un entier et $0 \leq y \leq 5$.

6. Composition ignifuge selon la revendication 1, dans laquelle le sulfonate aromatique comprend un composé de formule (N-2) ou un sel de sodium de l'acide toluène sulfonique (NaTS) :

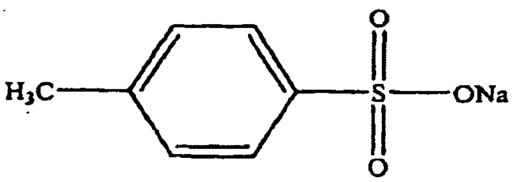

(N-2).

7. Composition ignifuge selon la revendication 1, dans laquelle le siloxane oligomère comprend un composé de formule (P-1) :

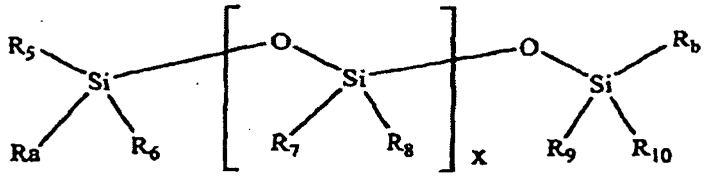

(P-1)

dans laquelle $R_5$, $R_6$, $R_7$, $R_8$, $R_9$, $R_{10}$, et $R_a$ et $R_b$ sont sélectionnés indépendamment à partir d'un groupe alkyle

en $C_1$ à $C_8$, tel que méthyle et éthyle, ou un groupe arylalkyle, tel que phénylméthyle, phényléthyle, et phénylpropyle, ou un groupe aryle tel que phényle ; x est un entier ; et $1 \leq x \leq 10$.

**8.** Composition ignifuge selon la revendication 1, dans laquelle le siloxane oligomère comprend un composé de formule (P-2) :

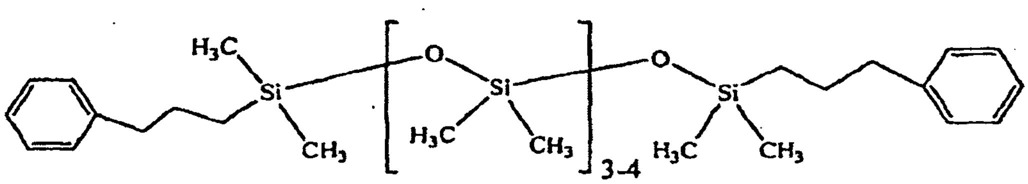

(P-2).

**9.** Composition ignifuge selon la revendication 1, comprenant en outre un additif à base de Si, présentant la formule ci-dessous :

$$R^1_aSi(OR^2)_bO_{(4-a-b)/2}$$

dans laquelle $R^1$ est un groupe hydrocarboné monovalent, substitué ou non substitué, contenant un groupe aryle en tant que composant essentiel ; $R^2$ est un groupe hydrocarboné monovalent, substitué ou non substitué ; $R^1$ et $R^2$ peuvent être identiques ou différents l'un de l'autre ; $0{,}2 \leq a \leq 2{,}7$ ; $0{,}2 \leq b \leq 2{,}4$ ; et $a+b \leq 3$.

**10.** Composition ignifuge selon la revendication 1, comprenant (i) 100 parties en poids de polycarbonate ; (ii) de 0,0001 partie à 0,2 partie en poids de KSS ; (iii) de 0,002 partie à 0,2 partie en poids de NaTS ; et (iv) en option de 0,05 partie à 2 parties en poids de bi-phénylpropyl diméthicone.

**11.** Composition ignifuge selon la revendication 10, comprenant de 0,01 partie à 0,08 partie en poids de KSS ; de 0,01 partie à 0,08 partie en poids de NaTS ; et de 0,3 partie à 0,8 partie en poids de bi-phénylpropyl diméthicone.

**12.** Composition ignifuge selon la revendication 1, dans laquelle le polycarbonate comprend des unités carbonate structurelles récurrentes de formule (A-2) :

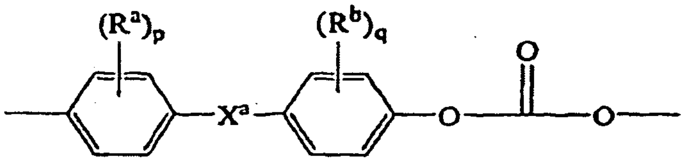

(A-2)

dans laquelle $R^a$ et $R^b$ représentent chacun un atome d'halogène ou un groupe hydrocarboné monovalent et peuvent être identiques ou différents, p et q sont chacun, indépendamment, des entiers valant de 0 à 4 ;
et $X^a$ représente l'un des groupes de formule (5) :

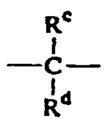

or

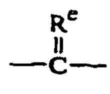

(5)

dans laquelle $R^c$ et $R^d$ représentent chacun, indépendamment, un atome d'hydrogène ou un groupe hydrocarboné linéaire ou cyclique monovalent, et $R^e$ est un groupe hydrocarboné divalent.

**13.** Composition ignifuge selon la revendication 1, dans laquelle le polycarbonate comprend des unités structurelles

récurrentes de formule (A-2) :

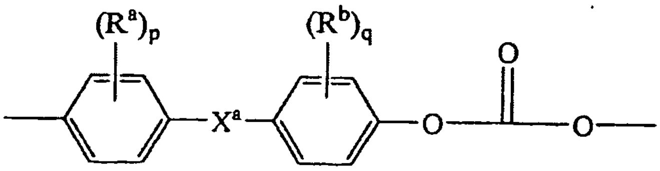

(A-2)

dans laquelle $X^a$ est un cyclohexane et $R^a$ et $R^b$ sont chacun méthyl, et p et q valent chacun 1.

**14.** Article ignifuge, fabriqué à partir de la composition ignifuge selon la revendication 1, sensiblement transparent et exempt d'halogène.

**15.** Article ignifuge selon la revendication 14, dans lequel la composition présente également un facteur de transmission lumineuse de 90 % ou plus.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3971756 A
- US 4028297 A
- US 4110299 A
- US 4130530 A
- US 4303575 A
- US 4335038 A
- US 4552911 A
- US 4916194 A
- US 5218027 A
- US 5508323 A
- US 3775367 A
- US 6353046 B
- US 6790899 B
- US 20050009968 A
- US 353732 A
- US 6405759 B
- US 20020099160 A1